(19) Europäisches Patentamt
European Patent Office
Office européen des brevets

(11) **EP 4 379 532 A1**

(12) **EUROPEAN PATENT APPLICATION**
published in accordance with Art. 153(4) EPC

(43) Date of publication:
**05.06.2024 Bulletin 2024/23**

(21) Application number: **22882431.4**

(22) Date of filing: **24.08.2022**

(51) International Patent Classification (IPC):
*G06F 3/14* (2006.01)        *G06F 3/04817* (2022.01)
*G06F 9/451* (2018.01)

(52) Cooperative Patent Classification (CPC):
**G06F 3/04817; G06F 3/14; G06F 9/451**

(86) International application number:
**PCT/CN2022/114538**

(87) International publication number:
**WO 2023/065812 (27.04.2023 Gazette 2023/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.10.2021 CN 202111237545**

(71) Applicant: **Huawei Technologies Co., Ltd.
Shenzhen, Guangdong 518129 (CN)**

(72) Inventors:
• **CHEN, Benzhi
Shenzhen, Guangdong 518129 (CN)**
• **YU, Zhiqiang
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **PAGE DISPLAY METHOD, ELECTRONIC DEVICE, AND COMPUTER-READABLE STORAGE MEDIUM**

(57)     This application is applicable to the field of terminal technologies, and in particular, relates to a page display method, an electronic device, and a computer-readable storage medium. In the method, when an application corresponding to a first display is applied to an electronic device including a second display, and a first resolution of the first display is different from a second resolution of the second display, the electronic device may adjust a font, an icon, and/or the like in a first layout file based on the second display and according to a preset adaptation rule, so that a font size, an icon size, and/or the like on a page that is of the application and that is displayed on the second display do/does not become excessively large or excessively small. This improves a page display effect and improves user experience.

FIG. 6(a)

**(Cont. next page)**

EP 4 379 532 A1

601'

602'

Hotel      Hairdressing      Movie      Car rental      Nearby

Food      Team building      KTV      Shopping      Discovery

Recommendations

603'

**Lakeside restaurant**
Near the West Lake

Minimum spend of 320 yuan          Sold 1,314

FIG. 6(b)

601"

602"

Hotel   Airplane   Movie   Car rental   Nearby   Food   Team building   KTV   Shopping   Discovery

Recommendations

**Lakeside restaurant**
Near the West Lake

Minimum spend of 320 yuan
Sold 1,314

**Cape restaurant**
Near a seaside

Minimum spend of 240 yuan
Sold 1,124

**Fast food restaurant**
Close to a subway station

Minimum spend of 60 yuan
Sold 1,302

**City restaurant**
Near the People's Square

Minimum spend of 160 yuan
Sold 1,302

**Delicious Cantonese food**
Delicious roast pork

Minimum spend of 120 yuan
Sold 1,110

**Old hot pot**
Sichuan hot pot

Minimum spend of 108 yuan
Sold 2,302

**Hunan restaurant**
Crawfish

Minimum spend of 150 yuan
Sold 2,510

603"

FIG. 6(c)

**Description**

This application claims priority to Chinese Patent Application No. 202111237545.0, filed with the China National Intellectual Property Administration on October 22, 2021 and entitled "PAGE DISPLAY METHOD, ELECTRONIC DEVICE, AND COMPUTER-READABLE STORAGE MEDIUM", which is incorporated herein by reference in its entirety.

**TECHNICAL FIELD**

This application relates to the field of terminal technologies, and in particular, relates to a page display method, an electronic device, and a computer-readable storage medium.

**BACKGROUND**

With development of electronic devices, a resolution of a display of an electronic device also continuously changes. To enable a same application to be applicable to displays with different resolutions, a developer needs to develop different versions of an application for different displays. As a result, a development workload of the developer is greatly increased. Currently, to reduce the development workload, the developer may develop an application for a display with any resolution, and when the application is applicable to a display with another resolution, proportional width-based or height-based zooming in/out may be performed on a page of the application. In this manner of performing proportional width-based or height-based zooming in/out on the page, a font, an icon, and/or the like on the page become/becomes excessively large or excessively small, resulting in unattractive page display and affecting user experience.

**SUMMARY**

Embodiments of this application provide a page display method, an electronic device, and a computer-readable storage medium, to resolve a problem that page display is unattractive and user experience is affected because of an excessively large or excessively small font, icon, and/or the like on a page on displays with different resolutions.
According to a first aspect, an embodiment of this application provides a page display method, applied to an electronic device. The electronic device includes a second display. The method may include:

> obtaining a first layout file corresponding to a to-be-displayed page, where the to-be-displayed page is a page of an application corresponding to a first display, and a first resolution of the first display is different from a second resolution of the second display; and
> displaying the to-be-displayed page on the second display according to a preset adaptation rule and based on the second display and the first layout file, where the preset adaptation rule is a rule for adjusting at least one of a font, an icon, and a picture that are in the first layout file.

According to the page display method, when the application corresponding to the first display is applied the electronic device including the second display, the electronic device may adjust the font, the icon, and/or the like in the first layout file based on the second display and according to the preset adaptation rule. In this way, a font size, an icon size, and/or the like on the to-be-displayed page displayed on the second display can be adapted to the second display, so that the font, the icon, and/or the like are/is not excessively large or excessively small when the to-be-displayed page is displayed on the second display. This improves a page display effect and improves user experience. In addition, a developer does not need to develop and maintain a plurality of application versions. This greatly reduces development and maintenance workloads of the developer, and has strong usability and practicability. It should be understood that the application corresponding to the first display may be developed based on the first resolution of the first display.
In a possible implementation, the displaying the to-be-displayed page on the second display according to a preset adaptation rule and based on the second display and the first layout file may include:

> determining whether the first layout file is adapted to the second display; and
> when the first layout file is not adapted to the second display, displaying the to-be-displayed page on the second display according to the preset adaptation rule and based on the second display and the first layout file.

In the page display method provided in this implementation, the electronic device may process only the to-be-displayed page that is in the application and that needs to be adapted, and a to-be-displayed page that is in the application and that is adapted to the second display is not affected. This can greatly improve page display efficiency and improve robustness of the page display method.

In an example, the determining whether the first layout file is adapted to the second display may include: obtaining a page label corresponding to the to-be-displayed page, and determining, based on the page label, whether the first layout file is adapted to the second display.

In the page display method provided in this implementation, when the developer develops the application on the page, the page label may be added to identify whether the to-be-displayed page is adapted to the second display. In this way, the electronic device may directly determine, based on the page label corresponding to the to-be-displayed page, whether the to-be-displayed page is adapted to the second display. This improves a determining speed.

In another example, the determining whether the first layout file is adapted to the second display may include:

obtaining the first resolution of the first display and the second resolution of the second display, and obtaining a font size of a target text in the first layout file and/or an icon size of a target icon in the first layout file, where the target text is any text on the to-be-displayed page, and the target icon is any icon on the to-be-displayed page; and

when the first resolution is lower than the second resolution, if the font size of the target text in the first layout file is greater than a first preset threshold, and/or the icon size of the target icon in the first layout file is greater than a third preset threshold, determining that the first layout file is not adapted to the second display; or

when the first resolution is higher than the second resolution, if the font size of the target text in the first layout file is less than a second preset threshold, and/or the icon size of the target icon in the first layout file is less than a fourth preset threshold, determining that the first layout file is not adapted to the second display.

In the page display method provided in this implementation, the electronic device may automatically determine, based on the font size and/or the icon size in the first layout file, whether the to-be-displayed page is adapted to the second display. In this way, the developer does not need to set the page label, and a development workload of the developer can be reduced. In this case, the first layout file may be a layout file obtained by processing an original layout file in an original display manner based on the second display. The original display manner is a display manner that is set by the developer and in which the to-be-displayed page is adapted to the second display, for example, may be a manner of performing proportional width-based or height-based zooming in/out.

Each of the first preset threshold and the second preset threshold may be a ratio relative to an original font size. In this case, for any text, if a ratio of a font size of the text to the original font size is greater than the first preset threshold, it may be considered that a font is excessively large; or if a ratio of a font size of the text to the original font size is less than the second preset threshold, it may be considered that a font is excessively small. The original font size is a font size on the to-be-displayed page displayed on the first display.

Alternatively, different first preset thresholds and second preset thresholds may be respectively set for different texts. In this case, the first preset thresholds and the second preset thresholds may be specific values or specific ratios. In other words, there are a corresponding first preset threshold and second preset threshold for any text. In this case, for any text, whether a font of the text is excessively large or excessively small may be determined based on the first preset threshold and the second preset threshold that correspond to the text.

Similarly, each of the third preset threshold and the fourth preset threshold may also be a ratio relatively to an original icon size; or different third preset thresholds and fourth preset thresholds may be respectively set for different icons. The original icon size is an icon size on the to-be-displayed page displayed on the first display.

In a possible implementation, the displaying the to-be-displayed page on the second display according to a preset adaptation rule and based on the second display and the first layout file may include:

adjusting the first layout file according to the preset adaptation rule and based on the second display, to obtain a second layout file; and

displaying the to-be-displayed page on the second display based on the second layout file.

In an example, when the first layout file is an original layout file corresponding to a case in which the to-be-displayed page is displayed on the first display, the adjusting the first layout file according to the preset adaptation rule and based on the second display, to obtain a second layout file may include:

adjusting icon arrangement in the first layout file according to the preset adaptation rule and based on the second display, and/or adjusting a picture size or picture arrangement in the first layout file according to the preset adaptation rule and based on the second display, to obtain the second layout file.

In the page display method provided in this implementation, the electronic device may perform layout adjustment directly based on the original layout file. In this case, the electronic device may adjust only the icon arrangement, the picture arrangement, or the picture size; or the electronic device may adjust only the icon arrangement and the picture arrangement; or the electronic device may adjust only the icon arrangement and the picture size; or the electronic device may adjust only the icon arrangement, the picture arrangement, and the picture size, without adjusting the font size, the icon size, and the picture size, and the like in the first layout file. In this way, an adjustment workload can be reduced, adjustment efficiency can be improved, and a page display speed is improved.

It may be understood that, when the first layout file is the original layout file corresponding to the case in which the to-be-displayed page is displayed on the first display, the electronic device may display, through rendering, the to-be-displayed page based on the first layout file, and adjust the to-be-displayed page according to the preset adaptation rule and based on the second display during display through rendering. In this case, the electronic device may further store, as the second layout file, a layout file corresponding to the case in which the to-be-displayed page is displayed on the second display. Subsequently, when the to-be-displayed page needs to be displayed on the second display again, the electronic device may display, through rendering, the to-be-displayed page on the second display of the electronic device directly based on the second layout file.

It should be understood that, when the first layout file is the original layout file corresponding to the case in which the to-be-displayed page displayed on the first display, the electronic device may also appropriately adjust the font size on a basis of ensuring that a difference between a second font size on the to-be-displayed page displayed on the second display and a first font size on the to-be-displayed page displayed on the first display is small. For example, the second font size is adjusted to 1.1 times the first font size. This can improve a page display effect.

Similarly, the electronic device may also appropriately adjust the icon size on a basis of ensuring that a difference between a second icon size on the to-be-displayed page displayed on the second display and a first icon size on the to-be-displayed page displayed on the first display is small. For example, the second icon size is adjusted to 1.2 times the first icon size. This can improve the page display effect.

Similarly, for a small picture, the electronic device may also appropriately adjust the icon size on a basis of ensuring that a difference between a second picture size on the to-be-displayed page displayed on the second display and a first picture size on the to-be-displayed page displayed on the first display is small. This can improve the page display effect.

For example, the adjusting a picture size or picture arrangement in the first layout file according to the preset adaptation rule and based on the second display may include:

when a picture width in the first layout file is less than a first width threshold, adjusting the picture arrangement in the first layout file according to the preset adaptation rule and based on the second display; or
when a picture width in the first layout file is greater than or equal to a first width threshold, adjusting a picture size on the to-be-displayed page according to the preset adaptation rule and based on the second display.

In the page display method provided in this implementation, when the to-be-displayed page includes a small picture, the electronic device may adjust the picture in a way similar to adjusting the icon, so that the second display can display much content. When the to-be-displayed page includes a large picture, the electronic device may not adjust the picture arrangement, but adjust only the picture size, so that the picture is adapted to the second display. This improves the page display effect.

In another example, when the first layout file is a layout file obtained by proportionally zooming in/out an original layout file based on the second display, the adjusting the first layout file according to the preset adaptation rule and based on the second display, to obtain a second layout file may include:

adjusting the font size in the first layout file according to the preset adaptation rule and based on the second display, to obtain the second layout file; and/or
adjusting the icon size and icon arrangement in the first layout file according to the preset adaptation rule and based on the second display, to obtain the second layout file.

For example, when the first resolution of the first display is lower than the second resolution of the second display, a font size in the second layout file is $\alpha$ times a font size in the first layout file, and $\alpha = h/(h + w)$; or

when the first resolution of the first display is higher than the second resolution of the second display, a font size in the second layout file is $\beta$ times a font size in the first layout file, and $\beta = (h + w)/h$, where
h is a height of the second display, and w is a width of the second display.

In the page display method provided in this implementation, the electronic device may perform layout adjustment based on the original layout file adjusted in the original adjustment manner. In this case, the font size and/or the icon size may be adjusted according to the preset adaptation rule and based on the second display, so that a font is not excessively large or excessively small when the to-be-displayed page is displayed on the second display. This improves user experience. In addition, the icon arrangement may be further adjusted according to the preset adaptation rule and based on the second display, so that the second display can display as much content as possible. This improves the page display effect.

In another example, when the first layout file is the layout file obtained by proportionally zooming in/out the original layout file based on the second display, the adjusting the first layout file according to the preset adaptation rule and based on the second display, to obtain a second layout file may include:
when a picture width in the first layout file is less than a second width threshold, adjusting a picture size and picture arrangement in the first layout file according to the preset adaptation rule and based on the second display, to obtain the second layout file.

In the page display method provided in this implementation, the electronic device may perform layout adjustment based on the original layout file adjusted in the original adjustment manner. In this case, if the to-be-displayed page includes a picture, and the picture is small, the electronic device may further adjust the picture size and the picture arrangement according to the preset adaptation rule and based on the second display. This improves the page display effect and improves user experience.

In a possible implementation, the electronic device is an electronic device having a foldable display, the first display is a display corresponding to a case in which the foldable display is in a folded state, and the second display is a display corresponding to a case in which the foldable display is in an unfolded state; or
the first display is a display corresponding to a case in which the foldable display is in an unfolded state, and the second display is a display corresponding to a case in which the foldable display is in a folded state.

The page display method provided in this implementation may be applied to the electronic device having the foldable display. For example, when an application developed based on the display in the folded state is applied to the electronic device having the foldable display, if the user switches the foldable display from the folded state to the unfolded state, the electronic device may adjust, based on the display in the unfolded state and according to the preset adaptation rule, the first layout file corresponding to the folded state, so that a font, an icon, and/or the like on the to-be-displayed page do/does not become excessively large. This improves the page display effect and improves user experience. When the user restores the foldable display from the unfolded state to the folded state, the electronic device may further restore an adjusted first layout file to the first layout file corresponding to the folded state, to restore the font, the icon, and/or the like on the to-be-displayed page to be in a state before adjustment.

Similarly, when an application developed based on the display in the unfolded state is applied to the electronic device having the foldable display, if the user switches the foldable display from the unfolded state to the folded state, the electronic device may adjust, based on the display in the folded state and according to the preset adaptation rule, the first layout file corresponding to the unfolded state, so that a font, an icon, and/or the like on the to-be-displayed page do/does not become excessively small. This improves the page display effect and improves user experience. When the user restores the foldable display from the folded state to the unfolded state, the electronic device may restore an adjusted first layout file to the first layout file corresponding to the unfolded state, to restore the font, the icon, and/or the like on the to-be-displayed page to be in a state before adjustment.

According to a second aspect, an embodiment of this application provides a page display apparatus, used in an electronic device. The electronic device includes a second display. The page display apparatus may include:

a layout file obtaining module, configured to obtain a first layout file corresponding to a to-be-displayed page, where the to-be-displayed page is a page of an application corresponding to a first display, and a first resolution of the first display is different from a second resolution of the second display; and
a page display module, configured to display the to-be-displayed page on the second display according to a preset adaptation rule and based on the second display and the first layout file, where the preset adaptation rule is a rule for adjusting at least one of a font, an icon, and a picture that are in the first layout file.

In a possible implementation, the page display module may include:

an adaptation determining unit, configured to determine whether the first layout file is adapted to the second display; and
a first page display unit, configured to: when the first layout file is not adapted to the second display, display the to-be-displayed page on the second display according to the preset adaptation rule and based on the second display and the first layout file.

In an example, the adaptation determining unit may include:
a label obtaining subunit, configured to: obtain a page label corresponding to the to-be-displayed page, and determine, based on the page label, whether the first layout file is adapted to the second display.

In another example, the adaptation determining unit may include:

a size obtaining subunit, configured to: obtain the first resolution of the first display and the second resolution of the second display, and obtain a font size of a target text in the first layout file and/or an icon size of a target icon in the first layout file, where the target text is any text on the to-be-displayed page, and the target icon is any icon on the to-be-displayed page;

a first adaptation determining subunit, configured to: when the first resolution is lower than the second resolution, if the font size of the target text in the first layout file is greater than a first preset threshold, and/or the icon size of the target icon in the first layout file is greater than a third preset threshold, determine that the first layout file is not adapted to the second display; and

a second adaptation determining subunit, configured to: when the first resolution is higher than the second resolution, if the font size of the target text in the first layout file is less than a second preset threshold, and/or the icon size of the target icon in the first layout file is less than a fourth preset threshold, determine that the first layout file is not adapted to the second display.

In a possible implementation, the page display module may include:

a layout adjustment unit, configured to adjust the first layout file according to the preset adaptation rule and based on the second display, to obtain a second layout file; and

a second page display unit, configured to display the to-be-displayed page on the second display based on the second layout file.

In an example, when the first layout file is an original layout file corresponding to a case in which the to-be-displayed page is displayed on the first display, the layout adjustment unit may be configured to: adjust icon arrangement in the first layout file according to the preset adaptation rule and based on the second display, and/or adjust a picture size or picture arrangement in the first layout file according to the preset adaptation rule and based on the second display, to obtain the second layout file.

For example, when a picture width in the first layout file is less than a first width threshold, the layout adjustment unit may be further configured to adjust the picture arrangement in the first layout file according to the preset adaptation rule and based on the second display.

When a picture width in the first layout file is greater than or equal to a first width threshold, the layout adjustment unit may be further configured to adjust a picture size on the to-be-displayed page according to the preset adaptation rule and based on the second display.

In another example, when the first layout file is a layout file obtained by proportionally zooming in/out an original layout file based on the second display, the layout adjustment unit may be further configured to: adjust the font size in the first layout file according to the preset adaptation rule and based on the second display, to obtain the second layout file; and/or adjust the icon size and icon arrangement in the first layout file according to the preset adaptation rule and based on the second display, to obtain the second layout file.

For example, when the first resolution of the first display is lower than the second resolution of the second display, a font size in the second layout file is $\alpha$ times a font size in the first layout file, and $\alpha = h/(h + w)$; or

when the first resolution of the first display is higher than the second resolution of the second display, a font size in the second layout file is $\beta$ times a font size in the first layout file, and $\beta = (h + w)/h$, where

h is a height of the second display, and w is a width of the second display.

In another example, when the first layout file is the layout file obtained by proportionally zooming in/out the original layout file based on the second display, the layout adjustment unit may be further configured to: when a picture width in the first layout file is less than a second width threshold, adjust a picture size and picture arrangement in the first layout file according to the preset adaptation rule and based on the second display, to obtain the second layout file.

In a possible implementation, the electronic device is an electronic device having a foldable display, the first display is a display corresponding to a case in which the foldable display is in a folded state, and the second display is a display corresponding to a case in which the foldable display is in an unfolded state; or

the first display is a display corresponding to a case in which the foldable display is in an unfolded state, and the second display is a display corresponding to a case in which the foldable display is in a folded state.

According to a third aspect, an embodiment of this application provides an electronic device. The electronic device includes a memory, a processor, and a computer program that is stored in the memory and that can be run on the processor. When the processor executes the computer program, the electronic device is enabled to implement the page display method according to any one of the implementations of the first aspect.

According to a fourth aspect, an embodiment of this application provides a computer-readable storage medium. The computer-readable storage medium stores a computer program. When the computer program is executed by a computer, the computer is enabled to implement the page display method according to any one of the implementations of the first aspect.

According to a fifth aspect, an embodiment of this application provides a computer program product. When the computer program product runs on an electronic device, the electronic device is enabled to perform the page display method according to any one of the implementations of the first aspect.

It should be understood that, for beneficial effects of the second aspect to the fifth aspect, refer to related descriptions in the first aspect. Details are not described herein again.

BRIEF DESCRIPTION OF DRAWINGS

FIG. 1 is a schematic diagram of a structure of an electronic device to which a page display method is applicable according to an embodiment of this application;

FIG. 2 is a schematic diagram of a software architecture to which a page display method is applicable according to an embodiment of this application;

FIG. 3 is an example diagram of icon adjustment according to an embodiment of this application;

FIG. 4 is an example diagram of picture adjustment according to an embodiment of this application;

FIG. 5(a) and FIG. 5(b) are a schematic diagram 1 of an application scenario according to an embodiment of this application;

FIG. 6(a) to FIG. 6(c) are a schematic diagram 2 of an application scenario according to an embodiment of this application; and

FIG. 7 is a schematic flowchart of a page display method according to an embodiment of this application.

**DESCRIPTION OF EMBODIMENTS**

It should be understood that, when used in the specification and appended claims of this application, the term "include" indicates presence of the described features, entireties, steps, operations, elements, and/or components, but does not exclude presence or addition of one or more other features, entireties, steps, operations, elements, components, and/or sets thereof.

It should also be understood that the term "and/or" used in the specification and the appended claims of this application indicates any combination and all possible combinations of one or more associated listed items, and includes these combinations.

As used in the specification and the appended claims of this application, the term "if" may be interpreted as "when" or "once" or "in response to determining" or "in response to detecting" depending on the context. Likewise, the phrase "if it is determined that" or "if (a described condition or event) is detected" may be interpreted as a meaning of "once it is determined that" or "in response to determining" or "once (a described condition or event) is detected" or "in response to detecting (a described condition or event)" depending on the context.

In addition, in descriptions of the specification and the appended claims of this application, the terms "first", "second", "third", and the like are merely intended for a purpose of differentiated description, but shall not be understood as an indication or an implication of relative importance.

Reference to "an embodiment", "some embodiments", or the like described in the specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

In addition, "a plurality of" mentioned in embodiments of this application should be explained as two or more.

Steps in a page display method provided in embodiments of this application are merely examples. Not all steps are mandatory, or not all content in each piece of information or each message is mandatory. A step or content may be added or reduced as required in a use process. A same step or steps or messages having a same function in embodiments of this application may be mutually referenced in different embodiments.

A service scenario described in embodiments of this application is intended to describe the technical solutions in embodiments of this application more clearly, but is not intended to limit the technical solutions provided in embodiments of this application. Persons of ordinary skill in the art may learn that with evolution of a network architecture and emergence of a new service scenario, the technical solutions provided in embodiments of this application are also applicable to a similar technical problem.

With development of electronic devices, a resolution of a display of an electronic device also continuously changes. To enable a same application to be applicable to displays with different resolutions, a developer needs to develop different versions of the application for displays with different resolutions. For example, for a foldable device, a resolution of a display in a folded state is usually designed based on an aspect ratio of 16:9, and a resolution of a display in an unfolded state is usually designed based on an aspect ratio of 8:7.1. That is, for the foldable device, a width of the display in the unfolded state is usually greater than a width of the display in the folded state; or a height of the display in the unfolded state is usually greater than a height of the display in the folded state. To enable the same application to be applicable to the electronic device in the folded state and the unfolded state, the developer needs to separately develop the application based on the display in the folded state and the display in the unfolded state. In other words, for the same application, both a version for the folded state and a version for the unfolded state need to be developed. When the foldable device is in the folded state, a page may be displayed by using the version for the folded state. Alternatively, when the foldable device is in the unfolded state, a page may be displayed by using the version for the unfolded state. In this manner of developing a plurality of versions for a same application, the developer needs to develop and maintain a plurality of sets of application code. As a result, development and maintenance workloads of the developer are greatly increased.

The resolution refers to a quantity of pixels of a display in a vertical direction (namely, a height) and a quantity of pixels of the display in a horizontal direction (namely, a width). For example, in a 5.2-inch electronic device whose resolution is 1920 × 1080, a display of the electronic device has 1920 pixels in a height and 1080 pixels in a width. A pixel density (namely, a quantity of pixels in each inch of a screen) of the electronic device is $\sqrt{1920^2 + 1080^2}/5.2 = 424$ ppi. A height of a display refers to a quantity of pixels of the display in the vertical direction. A width of the display refers to a quantity of pixels of the display in the horizontal direction.

To reduce development and maintenance workloads, the developer may develop an application for a display with any resolution. When the application is applied to displays with other different resolutions, a page may be displayed by performing proportional width-based or height-based zooming in/out on the page of the application. In this manner of performing proportional width-based or height-based zooming in/out on the page, a font, an icon, and/or the like on the page become/becomes excessively large or excessively small, resulting in unattractive page display and affecting user experience.

To resolve the foregoing problem, embodiments of this application provide a page display method. In the method, the developer may develop an application for a first display with a first resolution. When the application is applied to an electronic device including a second display, a second resolution of the second display is different from the first resolution, and the electronic device may display, through rendering, a to-be-displayed page on the second display according to a preset adaptation rule and based on the second display and a first layout file. The preset adaptation rule is a rule for adjusting a font, an icon, and/or the like in the first layout file. In this way, a font size, an icon size, and/or the like on the to-be-displayed page displayed on the second display are/is adapted to the second display, so that the font, the icon, and/or the like are/is not excessively large or excessively small when the to-be-displayed page is displayed on the second display. This improves a page display effect and improves user experience. In addition, the developer does not need to develop and maintain a plurality of application versions. This greatly reduces development and maintenance workloads of the developer, and has strong usability and practicability. The page display method provided in embodiments of this application may be applied to an electronic device. The electronic device may be an electronic device having a display, for example, a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a personal digital assistant (personal digital assistant, PDA), or a netbook. A specific type of the electronic device is not limited in embodiments of this application.

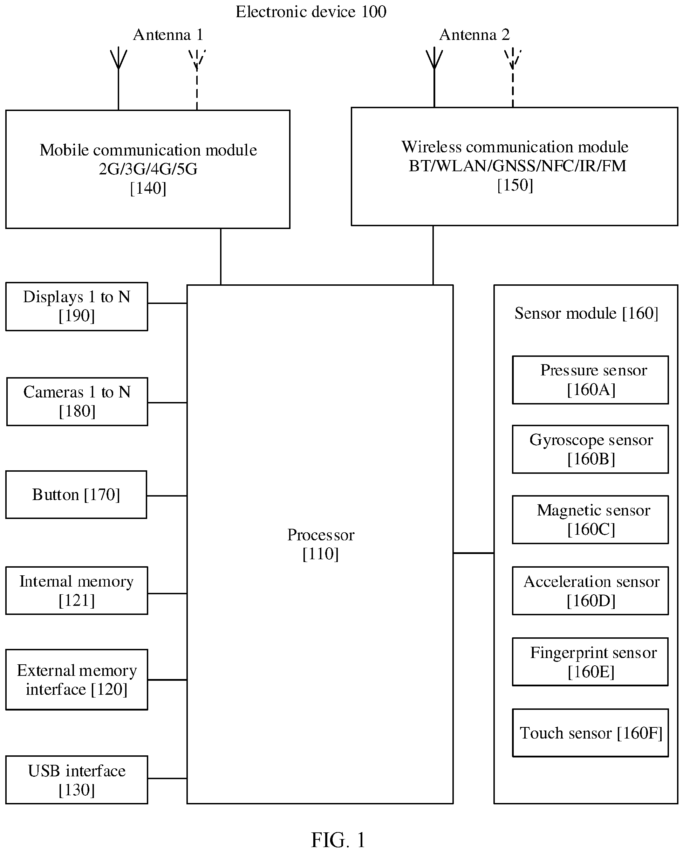

The following first describes the electronic device in embodiments of this application. FIG. 1 is a schematic diagram of a structure of an electronic device 100.

As shown in FIG. 1, the electronic device 100 may include a processor 110, an external memory interface 120, an internal memory 121, a universal serial bus (universal serial bus, USB) interface 130, an antenna 1, an antenna 2, a mobile communication module 140, a wireless communication module 150, a sensor module 160, a button 170, a camera 180, a display 190, and the like. The sensor module 160 may include a pressure sensor 160A, a gyroscope sensor 160B, a magnetic sensor 160C, an acceleration sensor 160D, a fingerprint sensor 160E, a touch sensor 160F, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, to improve system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 160F, a charger, a flashlight, the camera 180, and the like through different I2C bus interfaces. For example, the processor 110 may be coupled to the touch sensor 160F through the I2C interface, so that the processor 110 communicates with the touch sensor 160F through the I2C bus interface, to implement a touch function of the electronic device 100.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 150. For example, the processor 110 communicates with a Bluetooth module in the wireless communication module 150 through the UART interface, to implement a Bluetooth function.

The MIPI interface may be configured to connect the processor 110 to peripheral devices such as the display 190 and the camera 180. The MIPI interface includes a camera serial interface (camera serial interface, CSI), a display serial interface (display serial interface, DSI), and the like. In some embodiments, the processor 110 communicates with the camera 180 through the CSI interface, to implement a photographing function of the electronic device 100. The processor 110 communicates with the display 190 through the DSI interface, to implement a display function of the electronic device 100.

The GPIO interface may be configured by using software. The GPIO interface may be configured as a control signal or a data signal. In some embodiments, the GPIO interface may be configured to connect the processor 110 to the camera 180, the display 190, the wireless communication module 150, the sensor module 160, and the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to perform data transmission between the electronic device 100 and a peripheral device, or may be configured to connect to a headset for playing an audio through the headset. The interface may be further configured to connect to another electronic device such as an AR device.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

A wireless communication function of the electronic device 100 may be implemented through the antenna 1, the antenna 2, the mobile communication module 140, the wireless communication module 150, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 140 can provide a solution, applied to the electronic device 100, to wireless communication including 2G/3G/4G/5G, or the like. The mobile communication module 140 may include at least one filter, a switch, a power amplifier, a low noise amplifier (low noise amplifier, LNA), and the like. The mobile communication module 140 may receive an electromagnetic wave through the antenna 1, perform processing such as filtering or amplification on the received electromagnetic wave, and transmit a processed electromagnetic wave to the modem processor for demodulation. The mobile communication module 140 may further amplify a signal modulated by the modem processor, and convert an amplified signal into an electromagnetic wave for radiation through the antenna 1. In some embodiments, at least some functional modules in the mobile communication module 140 may be disposed in the processor 110. In some embodiments, at least some functional modules in the mobile communication module 140 may be disposed in a same device as at least some modules in the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device, or displays an image or a video through the display 190. In some embodiments, the modem processor may be an independent component. In some other embodiments, the modem processor may be independent of the processor 110, and is disposed in a same device as the mobile communication module 140 or another functional module.

The wireless communication module 150 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 150 may be one or more components integrating at least one communication processing module. The wireless communication module 150 receives an electromagnetic wave through the antenna 2, performs frequency modulation and filtering processing on an electromagnetic wave signal, and sends a processed signal to the processor 110. The wireless communication module 150 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communication module 140 are coupled, and the antenna 2 and the wireless communication module 150 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 190, the application processor, and the like. The GPU is a microprocessor for image processing, and is connected to the display 190 and the application processor. The GPU is configured to: perform mathematical and geometric computation, and render an image. The processor 110 may include one or more GPUs that execute program instructions to generate or change display information.

The display 190 is configured to display an image, a video, and the like. The display 190 includes a display panel. The display panel may be made of a material like a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, or a quantum dot light emitting diode (quantum dot light emitting diode, QLED). In some embodiments, the electronic device 100 may include one or N displays 190, where N is a positive integer greater than 1.

The electronic device 100 may implement a photographing function through the ISP, the camera 180, the video codec, the GPU, the display 190, the application processor, and the like.

The ISP is configured to process data fed back by the camera 180. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and a skin tone of the image. The ISP may further optimize parameters such as exposure and a color temperature of a photographing scenario. In some embodiments, the ISP may be disposed in the camera 180.

The camera 180 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 180, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, with reference to a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and a video are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (such as audio data and an address book) created during use of the electronic device 100, and the like. In addition, the internal memory 121 may include a high-speed random access memory, and may further include a non-volatile memory, for example, at least one magnetic disk storage device, a flash memory, or a universal flash storage (universal flash storage, UFS). The processor 110 executes various functional applications of the electronic device 100 and data processing by executing instructions stored in the internal memory 121 and/or instructions stored in the memory disposed in the processor.

The pressure sensor 160A is configured to sense a pressure signal, and can convert the pressure signal into an electrical signal. In some embodiments, the pressure sensor 160A may be disposed on the display 190. There are many types of pressure sensors 160A, such as a resistive pressure sensor, an inductive pressure sensor, and a capacitive pressure sensor. The capacitive pressure sensor may include at least two parallel plates made of conductive materials. When a force is applied to the pressure sensor 160A, capacitance between electrodes changes. The electronic device 100 determines a pressure intensity based on the change in the capacitance. When a touch operation is performed on the display 190, the electronic device 100 detects an intensity of the touch operation through the pressure sensor 160A. The electronic device 100 may also calculate a touch location based on a detection signal of the pressure sensor 160A. In some embodiments, touch operations that are performed at a same touch location but have different touch operation intensities may correspond to different operation instructions. For example, when a touch operation whose touch operation intensity is less than a first pressure threshold is performed on a "Messaging" application icon, an instruction for viewing an SMS message is executed. When a touch operation whose touch operation intensity is greater than or equal to a first pressure threshold is performed on a "Messaging" application icon, an instruction for creating a new SMS message is executed.

The gyroscope sensor 160B may be configured to determine a motion posture of the electronic device 100. In some embodiments, angular velocities of the electronic device 100 around three axes (which are x, y, and z axes) may be determined by using the gyroscope sensor 160B. The gyroscope sensor 160B may be configured to implement image stabilization during photographing. For example, when the shutter is pressed, the gyroscope sensor 160B detects an angle at which the electronic device 100 jitters, obtains, through calculation based on the angle, a distance for which a lens module needs to compensate, and allows the lens to cancel the jitter of the electronic device 100 through reverse motion, to implement image stabilization. The gyroscope sensor 160B may be further used in a navigation scenario and a motion-sensing game scenario.

The magnetic sensor 160C includes a Hall sensor. The electronic device 100 may detect opening and closing of a flip leather case by using the magnetic sensor 160C. In some embodiments, when the electronic device 100 is a clamshell phone, the electronic device 100 may detect opening and closing of a flip cover based on the magnetic sensor 160C. Further, a feature like automatic unlocking of the flip cover is set based on a detected open or closed state of the leather case or the flip cover.

The acceleration sensor 160D may detect accelerations in various directions (usually on three axes) of the electronic device 100. When the electronic device 100 is still, a magnitude and a direction of gravity may be detected. The acceleration sensor 160D may be further configured to identify a posture of the electronic device, and is used in applications like switching between a landscape mode and a portrait mode and a pedometer.

The fingerprint sensor 160E is configured to collect a fingerprint. The electronic device 100 may use a feature of the collected fingerprint to implement fingerprint-based unlocking, application lock access, fingerprint-based photographing, fingerprint-based call answering, and the like.

The touch sensor 160F is also referred to as a "touch device". The touch sensor 160F may be disposed on the display 190, and the touch sensor 160F and the display 190 constitute a touchscreen, which is also referred to as a "touch screen". The touch sensor 160F is configured to detect a touch operation performed on or near the touch sensor 160F. The touch sensor may transfer the detected touch operation to the application processor to determine a type of a touch event. A visual output related to the touch operation may be provided through the display 190. In some other embodiments, the touch sensor 160F may alternatively be disposed on a surface of the electronic device 100, and is located at a location different from that of the display 190.

The button 170 includes a power button, a volume button, and the like. The button 170 may be a mechanical button, or may be a touch button. The electronic device 100 may receive a button input, and generate a button signal input related to a user setting and function control of the electronic device 100.

A software system of the electronic device 100 may use a layered architecture, an event-driven architecture, a microkernel architecture, a microservice architecture, or a cloud architecture. In embodiments of this application, a software structure of the electronic device 100 is described by using an Android system with the layered architecture as an example.

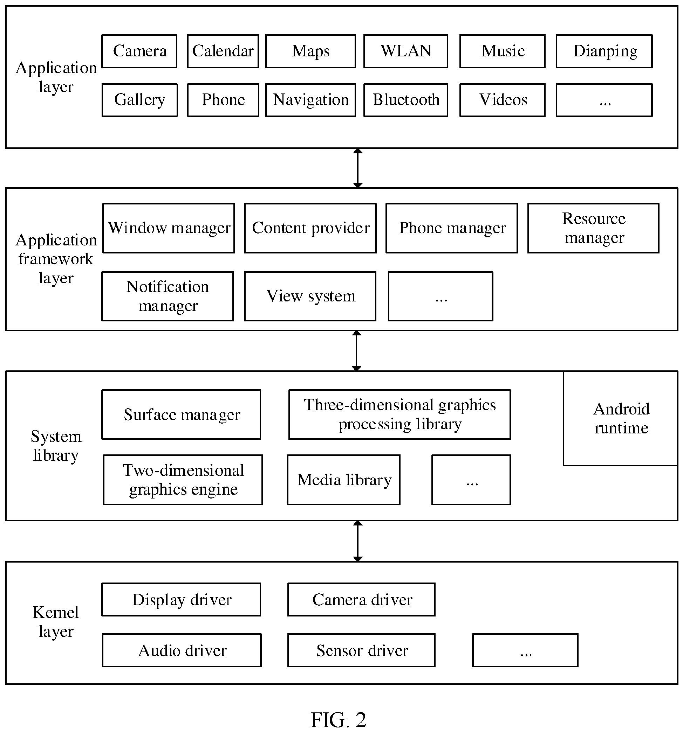

FIG. 2 is a block diagram of a software structure of the electronic device 100 according to an embodiment of this application.

In the layered architecture, software is divided into several layers, and each layer has a clear role and task. The layers communicate with each other through a software interface. In some embodiments, the Android operating system is divided into four layers: an application layer, an application framework layer, an Android runtime (Android runtime) and system library, and a kernel layer from top to bottom.

The application layer may include a series of application packages.

As shown in FIG. 2, the application packages may include applications such as Dianping®, Camera, Gallery, Calendar, Phone, Maps, Navigation, WLAN, Bluetooth, Music, and Videos.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, a phone book, and the like.

The view system includes visual controls such as a control for displaying a text and a control for displaying an image. The view system may be configured to construct an application. A display interface may include one or more views. For example, a display interface including an SMS message notification icon may include a view for displaying a text and a view for displaying a picture.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables the application to display notification information in a status bar, and may be configured to convey a message of a notification type. The notification information may automatically disappear after a short stay without user interaction. For example, the notification manager is configured to notify download completion, give a message notification, and the like. The notification manager may further display a notification in a form of a graph or a scroll bar text in a top status bar of the system, for example, a notification of an application that is run in a background, or may display a notification in a form of a dialog window on a screen. For example, text information is displayed in the status bar, a prompt tone is made, the electronic device vibrates, or an indicator blinks.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to a page display scenario.

When the touch sensor 160F receives a touch operation, a corresponding hardware interrupt is sent to the kernel layer. The kernel layer processes the touch operation into an original input event (including touch coordinates, a time stamp of the touch operation, and other information). The original input event is stored at the kernel layer. The application framework layer obtains the original input event from the kernel layer, and identifies a control corresponding to the original input event. For example, the touch operation is a touch tap operation, and a control corresponding to the tap operation is a control of an icon of a Dianping® application. The Dianping® application invokes an interface of the application framework layer to start the Dianping® application. In addition, the application framework layer obtains a size of the display 190, performs a layout and drawing on a page of the Dianping® application based on the size of the display 190, and then sends a drawn page to the kernel layer. The Dianping® application starts the display driver by invoking the kernel layer, to display the page of the Dianping® application on the display 190 through rendering.

The page display method provided in embodiments of this application is described below in detail with reference to the accompanying drawings and a specific application scenario.

In an embodiment of this application, a developer may develop an application for a display with a first resolution (referred to as a first display below). When the application is applied to an electronic device including a display with a second resolution (referred to as a second display below), the electronic device may obtain a to-be-displayed page of the application, and display, through rendering, the to-be-displayed page on the second display of the electronic device according to a preset adaptation rule and based on the second display and a first layout file. The to-be-displayed page is a page of an application corresponding to the first display. In other words, the to-be-displayed page may be a page of an application developed based on the first display. The first resolution is different from the second resolution. The first resolution may be a resolution of an entire screen of the first display, or may be a resolution corresponding to a part of a screen that is in the first display and that is used for displaying content. Similarly, the second resolution may be a resolution of an entire screen of the second display, or may be a resolution corresponding to a part of a screen that is in the second display and that is used for displaying content. The first layout file is a layout file that is not adapted to the second display. That is, the first layout file is an original layout file corresponding to a case in which the to-be-displayed page is displayed on the first display, or is a layout file obtained by performing, based on the second display, proportional width-based or height-based zooming in/out on the original layout file. The preset adaptation rule is a rule for adjusting a font, an icon, and/or the like in the first layout file. In this way, a font size, an icon size, and/or the like on the to-be-displayed page displayed on the second display are/is adapted to the second display, so that the font, the icon, and/or the like on the page are/is not excessively large or excessively small when the application developed based on the first display is applied to the second display. This improves a page display effect and improves user experience.

For example, the electronic device may adjust the first layout file based on the second display and according to the preset adaptation rule, to obtain a second layout file, and display, through rendering, the to-be-displayed page on the second display based on the second layout file. Alternatively, the electronic device may display, through rendering, the to-be-displayed page based on the first layout file, and may adjust the to-be-displayed page based on the second display and according to the preset adaptation rule during display through rendering. In this case, the electronic device may further store, as a second layout file, a layout file corresponding to the case in which the to-be-displayed page is displayed on the second display. Subsequently, when the to-be-displayed page needs to be displayed on the second display of the electronic device, the electronic device may display, through rendering, the to-be-displayed page on the second display of the electronic device directly based on the second layout file.

It should be understood that an excessively large font means that a font size is greater than a first preset threshold, and an excessively small font means that the font size is less than a second preset threshold. Likewise, an excessively large icon means that an icon size is greater than a third preset threshold, and an excessively small icon means that the icon size is less than a fourth preset threshold. Each of the first preset threshold and the second preset threshold may be a specific value. In this case, for any text, if a font size of the text is greater than the first preset threshold, it may be considered that a font is excessively large; or if a font size of the text is less than the second preset threshold, it may be considered that a font is excessively small.

Alternatively, each of the first preset threshold and the second preset threshold may be a ratio relative to an original font size. In this case, for any text, if a ratio of a font size of the text to the original font size is greater than the first preset threshold, it may be considered that a font is excessively large; or if a ratio of a font size of the text to the original font size is less than the second preset threshold, it may be considered that a font is excessively small. The original font size is a font size on the to-be-displayed page displayed on the first display.

Alternatively, different first preset thresholds and different second preset thresholds may be respectively set for different texts. In other words, there are a corresponding first preset threshold and second preset threshold for each text. In this case, for any text, whether a font of the text is excessively large or excessively small may be determined based on the first preset threshold and the second preset threshold that correspond to the text.

Similarly, each of the third preset threshold and the fourth preset threshold may also be a specific value, or may be a ratio relatively to an original icon size; or different third preset thresholds and fourth preset thresholds may be respectively set for different icons. The original icon size is an icon size on the to-be-displayed page displayed on the first display.

In an example, the developer may develop an application based on the first display with a low resolution. When the application is applied to an electronic device including the second display with a high resolution, the electronic device may obtain the second layout file according to a preset adaptation rule and based on the second display with the high resolution and the first layout file, to display the to-be-displayed page. That is, the first resolution of the first display may be lower than the second resolution of the second display.

For example, the developer may develop the application based on a display of a mobile phone. When the application is applied to a tablet computer, the tablet computer may obtain the second layout file according to the preset adaptation rule and based on a display of the tablet computer and the first layout file, to display the to-be-displayed page.

For example, for a foldable device, the developer may develop the application based on a display in a folded state. When the foldable device is in an unfolded state, the foldable device may obtain the second layout file according to the preset adaptation rule and based on the display in the unfolded state and the first layout file, to display the to-be-displayed page.

In another example, the developer may develop an application based on the first display with a high resolution. When the application is applied to an electronic device including the second display with a low resolution, the electronic device may obtain the second layout file according to a preset adaptation rule and based on the second display with the low resolution and the first layout file, to display the to-be-displayed page. That is, the first resolution of the first display may be higher than the second resolution of the second display.

For example, the developer may develop the application based on a display of a tablet computer. When the application is applied to a mobile phone, the mobile phone may obtain the second layout file according to the preset adaptation rule and based on a display of the mobile phone and the first layout file, to display the to-be-displayed page.

For example, for a foldable device, the developer may develop the application based on a display in an unfolded state. When the foldable device is in a folded state, the foldable device may obtain the second layout file according to the preset adaptation rule and based on the display in the folded state and the first layout file, to display the to-be-displayed page.

It should be understood that the preset adaptation rule may be a rule for adjusting interface elements such as a font, an icon, a picture, and the like in the first layout file. That is, the second layout file may be obtained by adjusting the interface elements such as the font, the icon, the picture, and the like in the first layout file. The following separately describes the preset adaptation rule used when the application developed based on the first display with the low resolution is applied to the second display with the high resolution and the preset adaptation rule used when the application developed based on the first display with the high resolution is applied to the second display with the low resolution.

**1. Preset adaptation rule used when the application developed based on the first display with the low resolution is applied to the second display with the high resolution**

It can be learned from the foregoing descriptions that the first layout file corresponding to the to-be-displayed page may be the original layout file corresponding to a case in which the to-be-displayed page is displayed on the first display, or may be the layout file obtained by performing, based on the second display, proportional width-based or height-based zooming in/out on the original layout file. The width and the height may respectively refer to a quantity of pixels of the display in a horizontal direction and a quantity of pixels of the display in a vertical direction.

For example, when the first layout file corresponding to the to-be-displayed page is the original layout file corresponding to the case in which the to-be-displayed page is displayed on the first display, the preset adaptation rule may be described below.

(1) Font

A font size may not be adjusted. To be specific, for any text, a second font size of the text in the second layout file may be the same as a first font size of the text in the first layout file. Alternatively, in a possible implementation, a second font size may be adjusted to R1 times a first font size, and $1 < R1 \leq 1.2$. A value of R1 may be specifically set by a technician based on an actual situation. It is ensured that a difference between a font size on the to-be-displayed page displayed on the second display and a font size on the to-be-displayed page displayed on the first display is small, so that a font on the page does not become excessively large and affect a page display effect when the application is displayed on the second display.

In a possible implementation, for any text, a user may customize a second font size of the text in the second layout file. To be specific, the user may customize a preferred font size in the electronic device, and the electronic device may store, in the preset adaptation rule, the font size customized by the user. In this way, the electronic device may display the to-be-displayed page based on the font size preferred by the user. This improves user experience. It should be understood that, for any icon or picture, a size of the icon or picture in the second layout file may also be customized by the user.

(2) Icon

An icon size may not be adjusted. To be specific, for any icon, a second icon size of the icon in the second layout file may be the same as a first icon size of the icon in the first layout file. Alternatively, in a possible implementation, a second icon size may be adjusted to S1 times a first icon size, and $1 < S1 \leq 1.2$. A value of S1 may be specifically set by the technician based on an actual situation. It is ensured that a difference between an icon size on the to-be-displayed page displayed on the second display and an icon size on the to-be-displayed page displayed on the first display is small, so that the icon on the page does not become excessively large and affect a page display effect when the application is displayed on the second display.

When a plurality of icons need to be arranged, more icons may be added horizontally based on a width of the second display, so that a quantity of rows of icons is reduced; and/or a quantity of columns of icons may be increased, so that the second display can display more content, to give full play to a function of the large-size display. For example, two rows of icons may be adjusted to one row of icons, or three rows of icons may be adjusted to two rows of icons, or one column of icons may be adjusted to two columns of icons, or two columns of icons may be adjusted to three columns of icons, or the like.

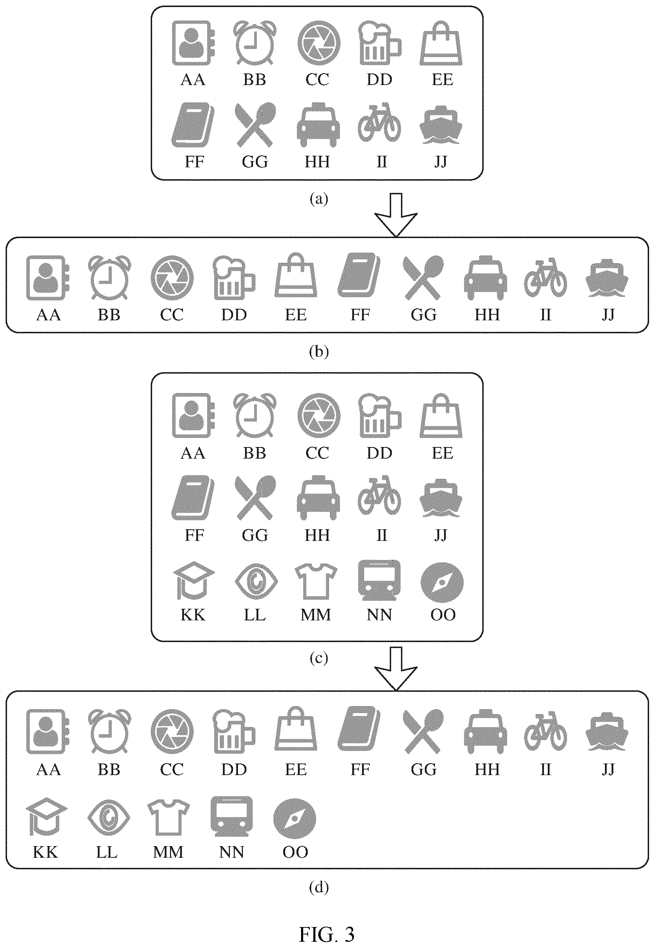

FIG. 3 is an example diagram of icon adjustment according to an embodiment of this application. For the example diagram, an example in which a pixel density of the second display is the same as a pixel density of the first display, and a second width (namely, a width of the second display) is twice a first width (namely, a width of the first display) is used for example descriptions. As shown in (a) in FIG. 3, when the to-be-displayed page includes two rows of icons, a first row of icons may include icons AA, BB, CC, DD, and EE, and a second row of icons may include icons FF, GG, HH, II, and JJ. In this case, the electronic device may adjust the two rows of icons to one row of icons shown in (b) in FIG. 3 for display. Alternatively, as shown in (c) in FIG. 3, when the to-be-displayed page includes three rows of icons, a first row of icons may include icons AA, BB, CC, DD, and EE, a second row of icons may include icons FF, GG, HH, II, and JJ, and a third row of icons may include icons KK, LL, MM, NN, and OO. In this case, the electronic device may adjust the three rows of icons to two rows of icons shown in (d) in FIG. 3 for display.

(3) Picture

When a picture width is less than a first width threshold, a picture size may not be adjusted. To be specific, a second picture size of the picture in the second layout file may be the same as a first picture size of the picture in the first layout file. Alternatively, in a possible implementation, a second picture size may be adjusted to T1 times a first picture size, and $1 < T1 \leq 1.2$. A value of T1 may be specifically set by the technician based on an actual situation. It is ensured that a difference between a picture size on the to-be-displayed page displayed on the second display and a picture size on the to-be-displayed page displayed on the first display is small, so that a small picture on the page does not become excessively large and affect a page display effect when the application is displayed on the second display. The picture width is a width of the picture in the first layout file, namely, a width of the picture displayed on the first display. The first width threshold may be specifically set by the technician based on an actual situation. For example, the first width threshold may be set to the first width $\times$ 70%.

In this case, when a plurality of pictures need to be arranged, more pictures may be added horizontally based on the width of the second display, so that a quantity of rows of pictures is reduced; and/or a quantity of columns of pictures may be increased. For example, two rows of pictures may be adjusted to one row of pictures, or three rows of pictures may be adjusted to two rows of pictures, or one column of pictures may be adjusted to two columns of pictures, or two columns of pictures may be adjusted to three columns of pictures, or the like.

When a picture width is greater than or equal to the first width threshold, the picture may be proportionally zoomed in based on the first width and the second width, or the picture may be proportionally zoomed in based on a first height (namely, a height of the first display) and a second height (namely, a height of the second display). Specifically, when the second width/first width is less than the second height/first height, the picture may be proportionally zoomed in based on the first width and the second width; or when the second width/first width is greater than the second height/first height, the picture may be proportionally zoomed in based on the first height and the second height.

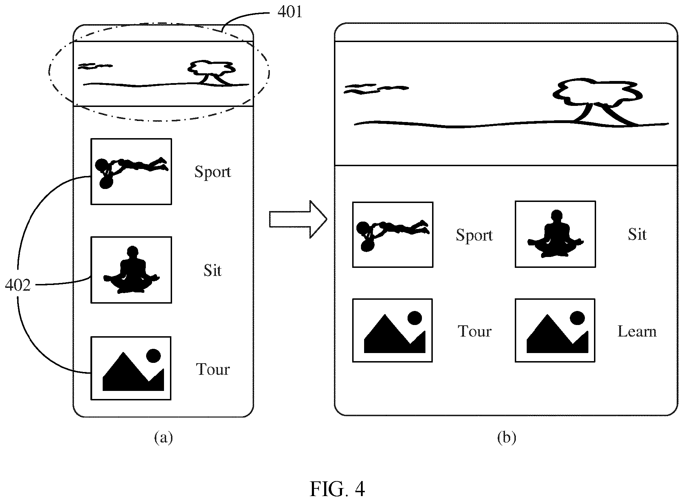

FIG. 4 is an example diagram of picture adjustment according to an embodiment of this application. For the example diagram, an example in which a pixel density of the second display is the same as a pixel density of the first display, and a second width is twice a first width is used for example descriptions. As shown in (a) in FIG. 4, when the to-be-displayed page includes one first picture 401 and one column of second pictures 402 (that is, the second pictures 402 that are respectively "Sport", "Sit", "Tour", "Learn", and the like), the second picture 402 "Learn" may not be displayed on the first display. In addition, a width of the first picture 401 is equal to the first width (in other words, the width of the first picture 401 is greater than the first width threshold), and a width of each of the second pictures 402 is equal to half of the first width (in other words, the width of each of the second pictures is less than the first width threshold). In this case, as shown in (b) in FIG. 4, the electronic device may proportionally zoom in the first picture 401 based on the first width and the second width, to zoom in the width of the first picture 401 to the second width for display, and may adjust the column of the second pictures 402 to two columns of the second pictures 402 for display.

(4) Another interface element

The another interface element may be a button, an input box, or the like. The another interface element may be proportionally zoomed in/out based on the first width and the second width. Alternatively, a height of the interface element may remain unchanged, and only a width of the interface element is extended, but a width after extension is less than or equal to the second width.

With reference to a specific application scenario, the following describes an example of page display based on the foregoing preset adaptation rule.

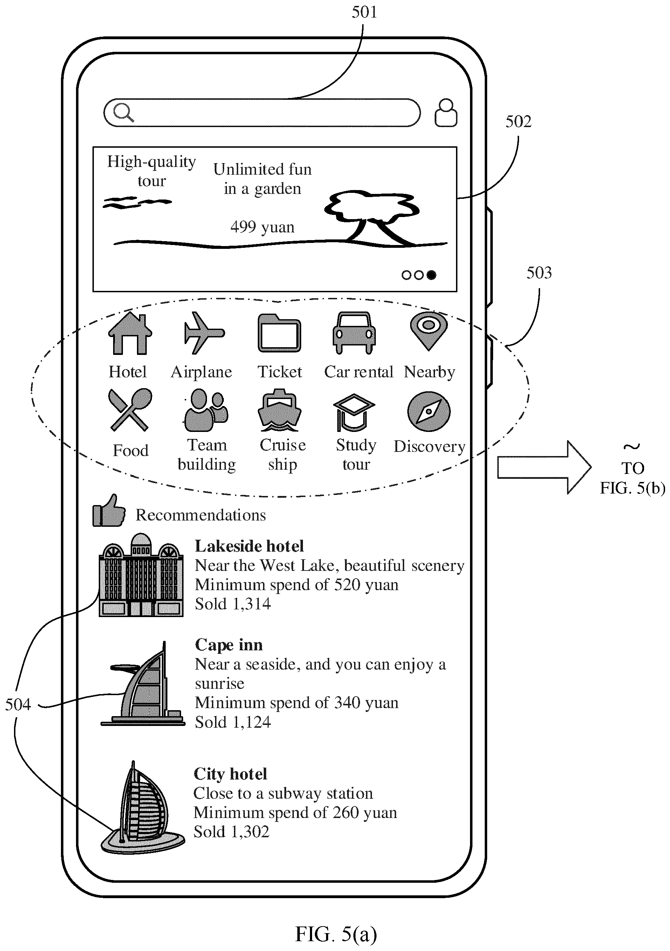

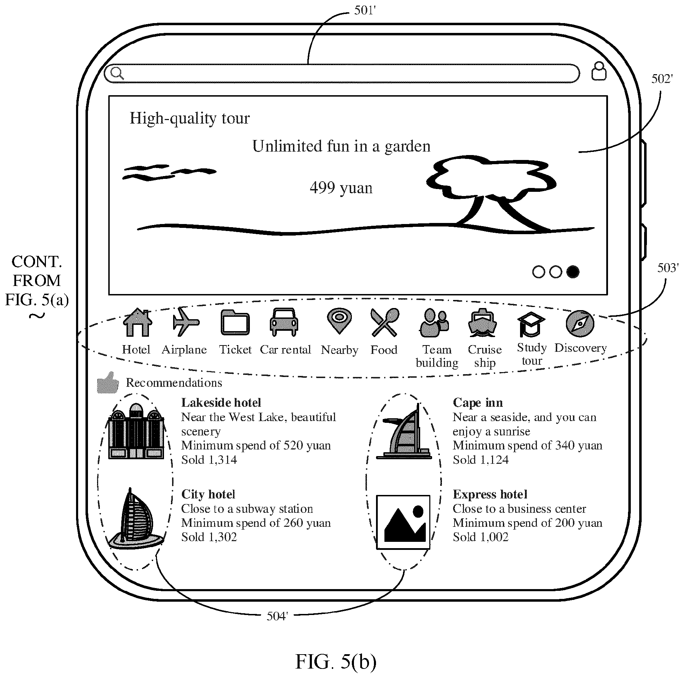

FIG. 5(a) and FIG. 5(b) are a schematic diagram 1 of an application scenario according to an embodiment of this application. In the application scenario, the pixel density of the second display is the same as the pixel density of the first display, the second width is twice the first width, the second height is the same as the first height, and the first resolution of the first display is lower than the second resolution of the second display. Specifically, the developer may develop an application based on the first display. When a specific to-be-displayed page of the application is displayed on the first display, a display effect shown in FIG. 5(a) may be presented. As shown in FIG. 5(a), the to-be-displayed page may include a search box 501, a first picture 502, two rows of icons 503, and a recommended item. The recommended item may include one column of second pictures 504 and introduction information that corresponds to the second pictures 504. A width of the first picture 502 is greater than the first width threshold, and a width of each of the second pictures 504 is less than the first width threshold.

When the to-be-displayed page is displayed on the electronic device including the second display, the electronic device may obtain a first layout file corresponding to the to-be-displayed page. The first layout file is presented with the display effect shown in FIG. 5(a). The electronic device may adjust the first layout file according to the foregoing preset adaptation rule. To be specific, the two rows of icons 503 are adjusted to one row of icons, and the column of second pictures 504 in the recommended item is adjusted to two columns of second pictures. In addition, the first picture 502 is proportionally zoomed in based on the first width and the second width, a height of the search box 501 may remain unchanged, and a width of the search box 501 may be extended based on the first width and the second width. In this way, the second layout file is obtained.

As shown in FIG. 5(b), when the electronic device displays the to-be-displayed page based on the second layout file, the to-be-displayed page may include one row of icons 503', two columns of second pictures 504', a first picture 502', and a search box 501'. In addition, a font size on the to-be-displayed page is the same as a font size on the to-be-displayed page shown in FIG. 5(a), a size of each of the icons 503' is the same as a size of each of the icons 503 shown in FIG. 5(a), and a size of each of the second pictures 504' is the same as a size of each of the second pictures 504 shown in FIG. 5(a). The first picture 502' is obtained by performing proportional width-based zooming in on the first picture 502 shown in FIG. 5(a), and the search box 501' is obtained by extending the width of the search box 501 shown in FIG. 5(a).

For example, when the first layout file corresponding to the to-be-displayed page is the layout file obtained by performing, based on the second display, proportional width-based or height-based zooming in/out on the original layout file, the preset adaptation rule may be described below.

(1) Font

A font size may be adjusted based on a second height and a second width of the second display. In a possible implementation, for any text, a second font size of the text in the second layout file may be adjusted to $\alpha$ times a first font size of the text in the first layout file, where $\alpha = h/(h + w)$. Herein, h is the second height of the second display, and w is the second width of the second display. In this case, the font size in the second layout file is zoomed out, so that a difference between a font size on the to-be-displayed page displayed on the second display and a font size on the to-be-displayed page displayed on the first display is small. In this way, a font on the page does not become excessively large and affect a page display effect when the application is displayed on the second display.

In a possible implementation, for any text, the user may customize a second font size of the text in the second layout file. To be specific, the user may customize a preferred font size in the electronic device, and the electronic device may store, in the preset adaptation rule, the font size customized by the user. In this way, the electronic device may display the to-be-displayed page based on the font size preferred by the user. This improves user experience. It should be understood that, for any icon or picture, a size of the icon or picture in the second layout file may also be customized by the user.

(2) Icon

An icon size may be adjusted based on the second height and the second width. In a possible implementation, for any icon, a second icon size of the icon in the second layout file may be adjusted to $\alpha$ times a first icon size of the icon in the first layout file. In this case, the icon size in the second layout file is zoomed out, so that the icon on the page does not become excessively large and affect a page display effect when the application is displayed on the second display.

When a plurality of icons need to be arranged, more icons may be further added horizontally based on a width of the second display, so that a quantity of rows of icons is reduced; and/or a quantity of columns of icons may be increased, so that the second display can display more content. For example, two rows of icons may be adjusted to one row of icons, or three rows of icons may be adjusted to two rows of icons, or one column of icons may be adjusted to two columns of icons, or two columns of icons may be adjusted to three columns of icons, or the like.

(3) Picture

When a picture width is less than a second width threshold, a picture size may be adjusted based on the second height and the second width. In a possible implementation, a second picture size of the picture in the second layout file may be adjusted to $\alpha$ times a first picture size of the picture in the first layout file. In this case, the picture size in the second layout file is zoomed out, so that a small picture on the page does not become excessively large and affect a page display effect when the application is displayed on the second display. The picture width is a width of the picture in the first layout file, that is, a width obtained by performing, based on the second display, proportional width-based or height-based zooming in/out on the width of the picture displayed on the first display. The second width threshold may be specifically set by the technician based on an actual situation. For example, the second width threshold may be set to the second width × 70%.

In this case, when a plurality of pictures need to be arranged, more pictures may be further added horizontally based on the width of the second display, so that a quantity of rows of pictures is reduced; and/or a quantity of columns of pictures may be increased. For example, two rows of pictures may be adjusted to one row of pictures, or three rows of pictures may be adjusted to two rows of pictures, or one column of pictures may be adjusted to two columns of pictures, or two columns of pictures may be adjusted to three columns of pictures, or the like.

When a picture width is greater than or equal to a second width threshold, the picture in the first layout file is proportionally zoomed in for being adapted to the second display. In this case, the picture size may not be adjusted. In other words, the second picture size of the picture in the second layout file may be the same as the first picture size of the picture in the first layout file.

(4) Another interface element

In the first layout file, the another interface element is proportionally zoomed in for being adapted to the second display. In this case, the another interface element may not be adjusted. In other words, a size of the another interface element in the second layout file may be the same as a size of the another interface element in the first layout file.

With reference to a specific application scenario, the following describes an example of page display based on the foregoing preset adaptation rule.

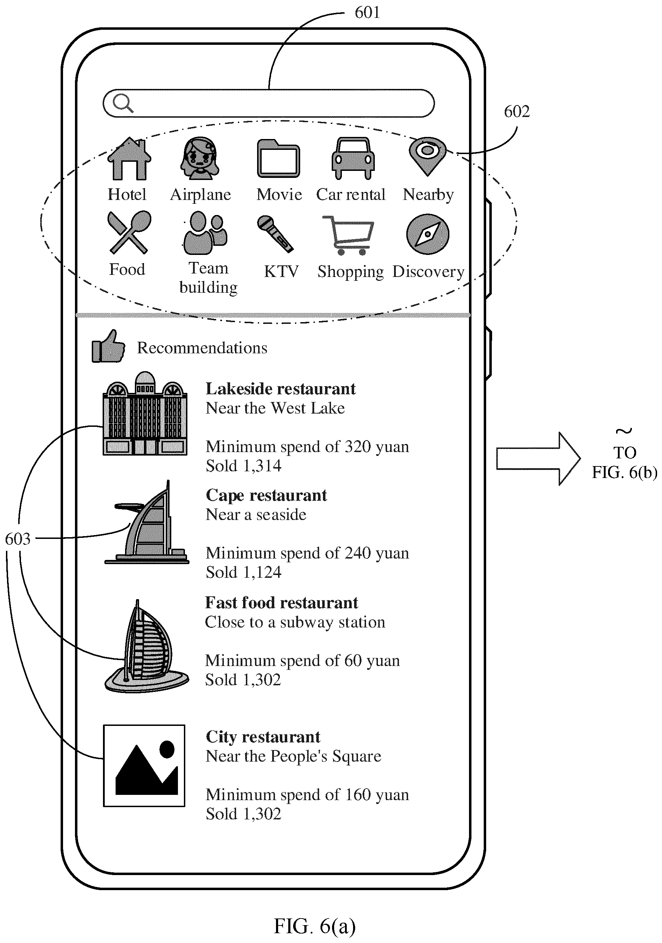

FIG. 6(a) to FIG. 6(c) are a schematic diagram 2 of an application scenario according to an embodiment of this application. In the application scenario, the pixel density of the second display is the same as the pixel density of the first display, the second width is twice the first width, the second height is the same as the first height, and the first resolution of the first display is lower than the second resolution of the second display. Specifically, the developer may develop an application based on the first display. When a specific to-be-displayed page of the application is displayed on the first display, a display effect shown in FIG. 6(a) may be presented. As shown in FIG. 6(a), the to-be-displayed page may include a search box 601, two rows of icons 602, and a recommended item. The recommended item may include one column of pictures 603 and introduction information that corresponds to the pictures 603. A width of each of the pictures 603 is less than the second width threshold.

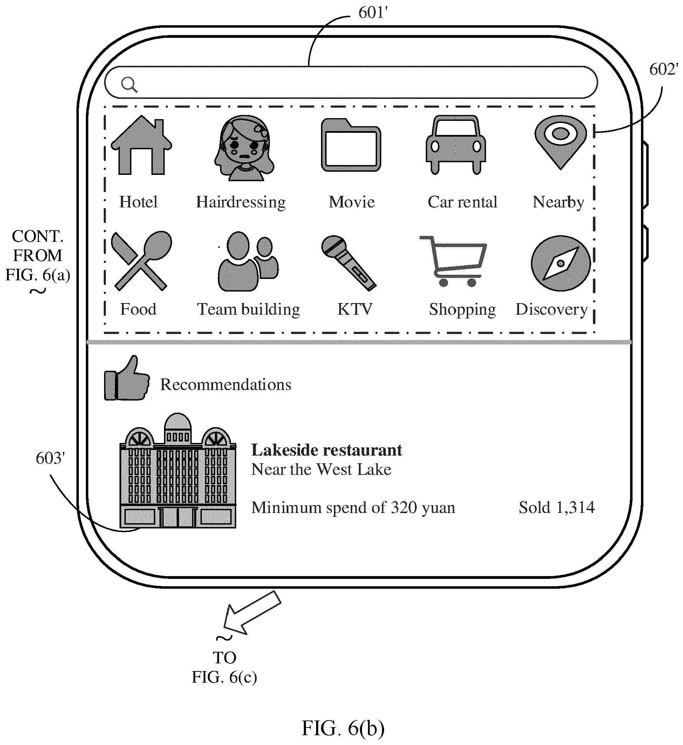

It should be understood that, when the to-be-displayed page needs to be displayed on the electronic device including the second display, if the to-be-displayed page is displayed in an original display manner in which the to-be-displayed page is not adapted to the second display, as shown in FIG. 6(b), the to-be-displayed page may include a search box 601', two rows of icons 602', and one column of pictures 603' in the recommended item. In this case, a font size on the to-be-displayed page is obviously greater than a font size on the to-be-displayed page shown in FIG. 6(a), a size of each of the icons 602' is obviously greater than a size of each of the icons 602 shown in FIG. 6(a), and a size of each of the pictures 603' is obviously greater than a size of each of the pictures 603 shown in FIG. 6(a). This affects a page display effect and reduces content displayed on the display. As a result, user experience is affected.

In this way, in this embodiment of this application, the electronic device may obtain a first layout file corresponding to the to-be-displayed page, where the first layout file is presented with a display effect shown in FIG. 6(b), and may adjust the first layout file according to the foregoing preset adaptation rule. To be specific, the electronic device may adjust the font size to $\alpha$ (that is, 0.5) times the font size shown in FIG. 6(b), adjust a size of each of icons 602" to $\alpha'$ times the size of each of the icons 602' shown in FIG. 6(b), adjust a size of each of pictures 603" to $\alpha$ times the size of each of the pictures 603' shown in FIG. 6(b), adjust the two rows of icons 602' to one row of icons, and adjust the one column of pictures 603' to two columns of pictures, to obtain the second layout file.

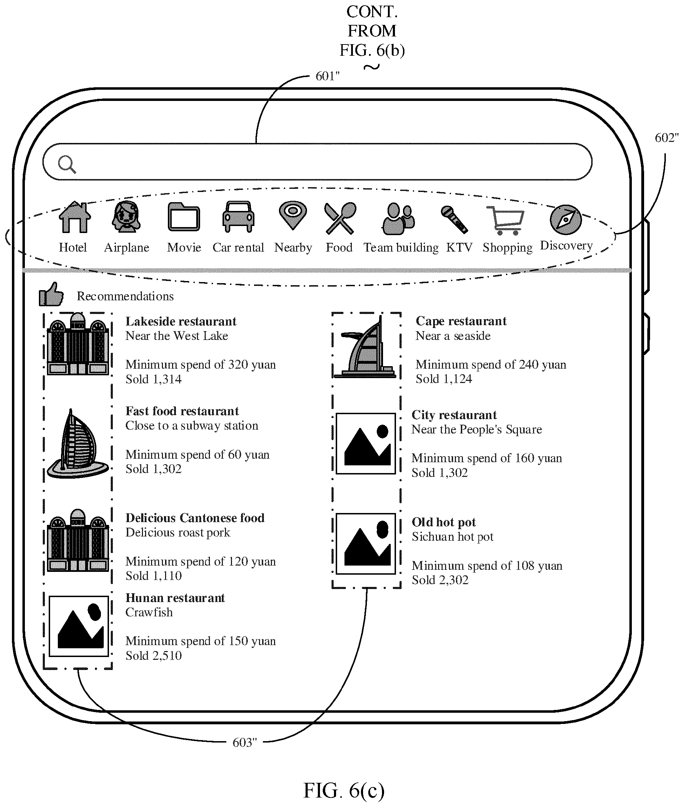

As shown in FIG. 6(c), when the electronic device displays the to-be-displayed page based on the second layout file, the to-be-displayed page may include a search box 601 ", the one row of icons 602", and the two columns of pictures 603". In addition, the font size on the to-be-displayed page is basically the same as the font size on the to-be-displayed page shown in FIG. 6(a), and the size of each of the icons 602" is basically the same as the size of each of the icons 602 shown in FIG. 6(a), the size of each of the pictures 603" is basically the same as the size of each of the pictures 603 shown in FIG. 6(a), and the search box 601" is the same as the search box 601' shown in FIG. 6(b).

**2. Preset adaptation rule used when the application developed based on the first display with the high resolution is applied to the second display with the low resolution**

It should be understood that the preset adaptation rule used when the application developed based on the first display with the high resolution is applied to the second display with the low resolution is opposite to the foregoing " 1. Preset adaptation rule used when the application developed based on the first display with the low resolution is applied to the second display with the high resolution".

Specifically, when the first layout file corresponding to the to-be-displayed page is an original layout file corresponding to the case in which the to-be-displayed page is displayed on the first display, the preset adaptation rule may be described below.

(1) Font

A font size may not be adjusted. To be specific, for any text, a second font size of the text in the second layout file may be the same as a first font size of the text in the first layout file. Alternatively, in a possible implementation, a second font size may be adjusted to R2 times a first font size, and $5/6 \leq R2 < 1$. A value of R2 may be specifically set by a technician based on an actual situation. It is ensured that a difference between a font size on the to-be-displayed page displayed on the second display and a font size on the to-be-displayed page displayed on the first display is small, so that a font on the page does not become excessively small and affect a page display effect when the application is displayed on the second display.

In a possible implementation, for any text, a user may customize a second font size of the text in the second layout file. To be specific, the user may customize a preferred font size in the electronic device, and the electronic device may store, in the preset adaptation rule, the font size customized by the user. In this way, the electronic device may display the to-be-displayed page based on the font size preferred by the user. This improves user experience. It should be understood that, for any icon or picture, a size of the icon or picture in the second layout file may also be customized by the user.

(2) Icon

An icon size may not be adjusted. To be specific, for any icon, a second icon size of the icon in the second layout file may be the same as a first icon size of the icon in the first layout file. Alternatively, in a possible implementation, a second icon size may be adjusted to S2 times a first icon size, and $5/6 \leq S2 < 1$. A value of S2 may be specifically set by the technician based on an actual situation. In addition, when a plurality of icons need to be arranged, a quantity of icons may be reduced horizontally based on a width of the second display, so that a quantity of rows of icons is increased; and/or a quantity of columns of icons may be reduced.

(3) Picture

When a picture width is less than a first width threshold, a picture size may not be adjusted. To be specific, a second picture size of the picture in the second layout file may be the same as a first picture size of the picture in the first layout file. Alternatively, in a possible implementation, a second picture size may be adjusted to T2 times a first picture size, and $5/6 \leq T2 < 1$. A value of T2 may be specifically set by the technician based on an actual situation. In this case, when a plurality of pictures need to be arranged, a quantity of pictures may be reduced horizontally based on the width of the second display, so that a quantity of rows of pictures is increased; and/or a quantity of columns of pictures may be reduced.

When a picture width is greater than or equal to a first width threshold, the picture may be proportionally zoomed out based on a width, or the picture may be proportionally zoomed out based on a height.

(4) Another interface element

Likewise, the another interface element may be proportionally zoomed out based on a width. Alternatively, a height of the interface element may remain unchanged, and only a width of the interface element is reduced. A reduced width is less than or equal to the second width.

Similarly, when the first layout file corresponding to the to-be-displayed page is a layout file obtained by performing, based on the second display, proportional width-based or height-based zooming in/out on the original layout file, the preset adaptation rule may be described below.

(1) Font

A font size may be adjusted based on a second height and a second width. In a possible implementation, for any text, a second font size of the text in the second layout file may be adjusted to $\beta$ times a first font size of the text in the first layout file, where $\beta = (h + w)/h$. Herein, h is the second height of the second display, and w is the second width of the second display. In this case, the font size in the second layout file is zoomed in, so that a difference between a font size on the to-be-displayed page displayed on the second display and a font size on the to-be-displayed page displayed on the first display is small. In this way, a font on the page does not become excessively small and affect a page display effect when the application is displayed on the second display.

In a possible implementation, for any text, the user may customize a second font size of the text in the second layout file. To be specific, the user may customize a preferred font size in the electronic device, and the electronic device may store, in the preset adaptation rule, the font size customized by the user. In this way, the electronic device may display the to-be-displayed page based on the font size preferred by the user. This improves user experience. It should be understood that, for any icon or picture, a size of the icon or picture in the second layout file may also be customized by the user.

(2) Icon

An icon size may be adjusted based on the second height and the second width. In a possible implementation, for any icon, a second icon size of the icon in the second layout file may be adjusted to β times a first icon size of the icon in the first layout file. Likewise, when a plurality of icons need to be arranged, a quantity of icons may be reduced horizontally based on the width of the second display, so that a quantity of rows of icons is increased; and/or a quantity of columns of icons may be reduced.

(3) Picture

When a picture width is less than a second width threshold, a picture size may be adjusted based on the second height and the second width. In a possible implementation, a second picture size of the picture in the second layout file may be adjusted to β times a first picture size of the picture in the first layout file. In this case, when a plurality of pictures need to be arranged, a quantity of pictures may be reduced horizontally based on the width of the second display, so that a quantity of rows of pictures is increased; and/or a quantity of columns of pictures may be reduced.
When a picture width is greater than or equal to a second width threshold, the picture size may not be adjusted. In other words, the second picture size of the picture in the second layout file is the same as the first picture size of the picture in the first layout file.

(4) Another interface element

In the first layout file, the another interface element is proportionally zoomed out for being adapted to the second display. In this case, the another interface element may not be adjusted. In other words, a size of the another interface element in the second layout file may be the same as a size of the another interface element in the first layout file.
It should be noted that the page display method provided in embodiments of this application is mainly used to display a to-be-displayed page that is of an application and that is not adapted to the second display. The to-be-displayed page that is not adapted to the second display means that a font, an icon, and/or the like are/is excessively large or excessively small when the to-be-displayed page is displayed on the second display. Specifically, when the application developed based on the first display is applied to the second display, whether the to-be-displayed page of the application is adapted to the second display may be first determined. When the to-be-displayed page is not adapted to the second display, it indicates that the font, the icon, and/or the like are/is excessively large or excessively small when the to-be-displayed page is displayed on the second display. In this case, the electronic device may display the to-be-displayed page according to the page display method provided in embodiments of this application. When the to-be-displayed page is adapted to the second display, it indicates that the developer has performed adaptation processing on the to-be-displayed page based on the second display when developing the application. That is, the font, the icon, and/or the like are/is not excessively large or excessively small when the to-be-displayed page is displayed on the second display. In this case, the electronic device may display the to-be-displayed page in an original display manner of the application. That is, according to the page display method provided in embodiments of this application, only the to-be-displayed page that is of the application and that needs to be adapted is processed, and the to-be-displayed page that is of the application and that is adapted to the second display is not affected. This can greatly improve robustness of the page display method.
For example, the electronic device may determine, in the following two manners, whether the to-be-displayed page is adapted to the second display.

Manner 1: Determine based on a page label

It should be understood that, when the developer develops pages of the application based on the first display, a page label may be separately added to each page. For example, the following page label meta is added. The page label indicates whether the page needs to be relayed out when being displayed on the second display, in other words, whether the page is adapted to the second display. Specifically, when isRelayout in meta is true, it indicates that the page needs to be relayed out when being displayed on the second display. In other words, it indicates that the page is not adapted to the second display. That is, the developer does not perform adaptation processing on the page based on the second display when developing the page. In this way, the first layout file is not adapted to the second display when the page is applied to the second display. When isRelayout is false, it indicates that the page does not need to be relayed out when being displayed on the second display. In other words, it indicates that the page is adapted to the second display. That is, the developer has performed adaptation processing on the page based on the second display when developing the page. In this way, the first layout file is automatically adapted to the second display when the page is applied to the second display. In this case, the electronic device may obtain the page label of the to-be-displayed page, to determine, based on the page label, whether the to-be-displayed page is adapted to the second display.

```
<! -- index.html-->
<html>
    <header>
      <meta> isRelayout = "true" </meta>
    </header>
    <body onclick =showCarDetails"> .... </body>
</html>
```

Manner 2: Determine based on page content

Specifically, the electronic device may obtain the first layout file corresponding to the to-be-displayed page. In this case, the first layout file may be a layout file obtained by processing the original layout file in the original display manner based on the second display. The original display manner may be a display manner that is set by the developer and in which the to-be-displayed page is adapted to the second display, for example, may be a manner of performing proportional width-based or height-based zooming in/out. Then, the electronic device may determine a font size of a target text in the first layout file, an icon size of a target icon in the first layout file, and/or the like, and determine, based on the font size of the target text in the first layout file, the icon size of the target icon in the first layout file, and/or the like, whether the to-be-displayed page is adapted to the second display. The target text may be any text on the to-be-displayed page. The target icon may be any icon on the to-be-displayed page.

For example, when the first resolution of the first display is lower than the second resolution of the second display, if the font size of the target text in the first layout file is greater than a first preset threshold, and/or the icon size of the target icon in the first layout file is greater than a third preset threshold, the electronic device may determine that the to-be-displayed page is not adapted to the second display. When the first resolution of the first display is higher than the second resolution of the second display, if the font size of the target text in the first layout file is less than a second preset threshold, and/or the icon size of the target icon in the first layout file is less than a fourth preset threshold, the electronic device may determine that the to-be-displayed page is not adapted to the second display.

The first preset threshold, the second preset threshold, the third preset threshold, and the fourth preset threshold may be specifically set by the technician based on an actual situation. For example, each of the first preset threshold and the second preset threshold may be set to a ratio relative to an original font size, and each of the third preset threshold and the fourth preset threshold may be set to a ratio relative to an original icon size. The first preset threshold and the second preset threshold may be separately set to 1.4, and the third preset threshold and the fourth preset threshold may be separately set to 0.6. To be specific, when a ratio of the font size of the target text in the first layout file to the font size of the target text in the original layout file is greater than 1.4, the electronic device may determine that the to-be-displayed page is not adapted to the second display. Alternatively, when a ratio of the icon size of the target icon in the first layout file to the icon size of the target icon in the original layout file is less than 0.6, the electronic device may determine that the to-be-displayed page is not adapted to the second display.

It may be understood that the determining, based on a resolution of the display, whether the font and/or the icon in the second layout file is excessively large or excessively small, to determine whether the to-be-displayed page is adapted to the second display is merely an example for explanation, and should not be construed as a limitation on embodiments of this application. In this embodiment of this application, when the pixel density of the first display is different from the pixel density of the second display, the electronic device may alternatively determine, with reference to physical sizes and/or pixel densities of the displays, whether the font and/or the icon in the second layout file are/is excessively large, to determine whether the to-be-displayed page is adapted to the second display.

For example, in a scenario in which the pixel density of the first display is different from the pixel density of the second display, for example, when the first resolution of the first display is higher than the second resolution of the second display, and a physical size of the first display is less than a physical size of the second display, the pixel density of the first display is greater than the pixel density of the second display. In this case, when the application developed based on the first display is applied to the second display, because the pixel density of the second display is less than the pixel density of the first display, the font, the icon, and/or the like on the to-be-displayed page displayed on the second display may correspondingly become larger. Because the second resolution is higher than the first resolution, the font size and/or the icon size on the to-be-displayed page are/is zoomed out when proportional width-based or height-based zooming in/out is performed. After the font size and/or the icon size on the to-be-displayed page are/is zoomed out, if the font and/or the icon on the to-be-displayed page is still excessively large or excessively small, the electronic device may determine that the to-be-displayed page is not adapted to the second display.

In an application scenario in which the pixel density of the first display is different from the pixel density of the second display, the preset adaptation rule may be determined based on the second resolution, the physical size, and the pixel density of the second display. A specific setting manner may be determined, based on an actual scenario, by a technician by referring to the foregoing determining manner of the preset adaptation rule.

It should be understood that, when the application developed based on the first display is applied to the electronic device including the second display, usually, the font, the icon, and/or the like on the page may be excessively large or excessively small only when the first resolution of the first display is different from the second resolution of the second display. Therefore, in this embodiment of this application, after the application is started, the electronic device may first obtain the first resolution of the first display and the second resolution of the second display of the electronic device to which the application is applied. When the first resolution is the same as the second resolution, the electronic device may directly determine that the to-be-displayed page of the application is adapted to the second display. In this case, the electronic device may directly display the to-be-displayed page in the original display manner of the application. When the first resolution is different from the second resolution, the electronic device needs to determine whether the to-be-displayed page is adapted to the second display. When determining that the to-be-displayed page is not adapted to the second display, the electronic device may display the to-be-displayed page according to the page display method provided in embodiments of this application.

In embodiments of this application, the to-be-displayed page may be a native page or a fifth generation hypertext markup language (hypertext markup language 5, HTML5) page. The HTML5 page may also be referred to as an H5 page. That is, the page display method provided in embodiments of this application may be used to display the native page that is not adapted to the second display, or may be used to display the H5 page that is not adapted to the second display.

The native page is developed on a mobile platform like an Android operating system (Operating System, OS), an iOS or a HarmonyOS by using an officially provided development language, a development tool, a development class library, and the like. For example, for an electronic device having the Android operating system, the native page may be an Android page developed on an Android development tool (for example, Android Studio) by using Java. For example, for an electronic device having the HarmonyOS, the native page may be a HarmonyOS page developed on a HarmonyOS development tool (for example, DevEco Studio) by using a HarmonyOS markup language (HarmonyOS markup language, HML), a cascading style sheet (cascading style sheet, CSS), and a JavaScript language (JavaScript language). The HTML5 page is developed by using an HTML5, the CSS, and the JS language and according to HTML5 specifications.

For example, when the to-be-displayed page is the native page, the electronic device may display the to-be-displayed page by using a native engine of a system. Specifically, when it is determined that the to-be-displayed page is not adapted to the second display, the native engine in the electronic device may determine the first layout file corresponding to the to-be-displayed page, and may obtain the second layout file according to the preset adaptation rule and based on the second display and the first layout file. Then, the native engine may generate a drawing node tree based on the second layout file, perform rasterization and synthesis processing on the drawing node tree, and display a processed drawing node tree on the second display of the electronic device through GPU rendering.

For example, when the to-be-displayed page is the H5 page, the electronic device may display the to-be-displayed page by using a webview kernel. Specifically, when it is determined that the to-be-displayed page is not adapted to the second display, the webview kernel in the electronic device may parse the to-be-displayed page to obtain nodes corresponding to the to-be-displayed page. Then, the webview kernel may build a document object model (document object model, DOM) tree based on a parent-child relationship between nodes, and obtain a CSS corresponding to the to-be-displayed page, to determine a style of each node in the DOM tree based on the CSS. Next, the webview kernel may generate, based on the DOM tree and the style of each node, the first layout file corresponding to the to-be-displayed page, and may obtain the second layout file according to the preset adaptation rule and based on the second display and the first layout file. Further, the webview kernel may generate a layer tree based on the second layout file, and may generate a drawing tree based on the layer tree. Finally, the webview kernel may perform rasterization and synthesis processing on the drawing tree, and may display the to-be-displayed page on the second display of the electronic device through GPU rendering.

In this way, when determining that the to-be-displayed page is not adapted to the second display, the electronic device may determine a type of the to-be-displayed page, that is, determine whether the to-be-displayed page is the native page or the H5 page. When the to-be-displayed page is the native page, the electronic device may display the to-be-displayed page by using the native engine of the system. When the to-be-displayed page is the H5 page, the electronic device may display the to-be-displayed page by using the webview kernel.

A manner of determining the type of the to-be-displayed page may be specifically set by a technician based on an actual scenario. For example, the type of the to-be-displayed page may be determined based on the first layout file corresponding to the to-be-displayed page. For example, when there is one border in an entire area that is in the first layout file and that includes interface elements such as a picture and a text, the electronic device may determine that the to-be-displayed page is the H5 page; or there is not only one border in an entire area that is in the first layout file and that includes interface elements such as a picture and a text, the electronic device may determine that the to-be-displayed page is the native page.

For example, the type of the to-be-displayed page may be determined based on a page label of the to-be-displayed page. To be specific, when the developer develops pages of the application, different page labels may be added to the native page and the H5 page. For example, a first page label is added to the native page, and a second page label is added to the H5 page. In this case, when the page label of the to-be-displayed page is the first page label, the electronic device may determine that the to-be-displayed page is the native page; or when the page label of the to-be-displayed page is the second page label, the electronic device may determine that the to-be-displayed page is the H5 page.

It may be understood that the page display method provided in embodiments of this application may be a system function of the electronic device, and may be used to display a to-be-displayed page of a system application, or may be used to display a to-be-displayed page of a third-party application installed on the electronic device. To be specific, for the system application, the developer may develop an application version applicable to the first display, and the electronic device may apply, based on the system function, the application version to the electronic device including the second display. This greatly reduces a development workload of the developer. For the third-party application, after the developer develops an application version applicable to the first display, the electronic device may apply, based on the system function, the application version to the electronic device including the second display, and the developer does not need to re-develop each page of the third-party application based on the second display of the electronic device. That is, the developer does not need to modify page logic and page layout of the third-party application to enable the page to be adapted to the second display of the electronic device. This greatly reduces an adaptation workload of the third-party application.

The page display method provided in embodiments of this application is described below by using a foldable device and an H5 page as an example. The developer may develop an application based on a display of the foldable device in a folded state. When the foldable device is in the folded state, the foldable device may directly display each to-be-displayed page of the application. When the foldable device is in an unfolded state, the foldable device may obtain to-be-displayed pages that are not adapted to the unfolded state. In this case, the foldable device may display these to-be-displayed pages according to the page display method provided in embodiments of this application.

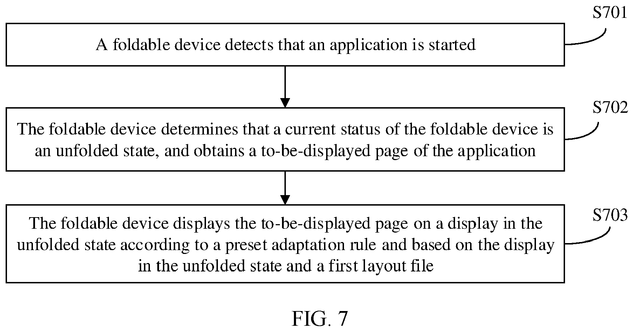

FIG. 7 is a schematic flowchart of a page display method according to an embodiment of this application. As shown in FIG. 7, the method may include the following steps.

S701: A foldable device detects that an application is started.

S702: The foldable device determines that a current status of the foldable device is an unfolded state, and obtains a to-be-displayed page of the application.

For example, the foldable device may determine the current status of the foldable device based on a width and a height of a current display of the foldable device. In a possible implementation, an aspect ratio may be calculated based on the width and the height of the current display of the foldable device. When the aspect ratio falls within a preset range, the foldable device may determine that the current status is the unfolded state; or when the aspect ratio does not fall within a preset range, the foldable device may determine that the current status is the folded state. The preset range may be specifically set by the technician based on an actual situation. For example, the preset range may be set to [0.9, 1.3] based on a width and a height of the display that correspond to a case in which the foldable device is in the unfolded state.

It should be understood that the determining the current status of the foldable device based on the width and the height is merely an example for explanation, and should not be construed as a limitation on embodiments of this application. In this embodiment of this application, the current status of the foldable device may be alternatively determined in another manner.

Optionally, if the current status of the foldable device is the folded state, the foldable device may display the to-be-displayed page of the application in an original display manner of the application.

S703: The foldable device displays the to-be-displayed page on the display in the unfolded state according to a preset adaptation rule and based on the display in the unfolded state and a first layout file.

It should be understood that, the preset adaptation rule herein may be an adaptation rule described in the foregoing " 1. Preset adaptation rule used when the application developed based on the first display with the low resolution is applied to the second display with the high resolution". For specific content of the preset adaptation rule, refer to the foregoing descriptions. Details are not described herein again. As described above, the first layout file may be an original layout file corresponding to a case in which the to-be-displayed page is displayed on the display in the folded state, or may be a layout file obtained by performing, based on the display in the unfolded state, proportional width-based or height-based zooming in/out on the original layout file.

As described above, the foldable device may adjust the first layout file based on the display in the unfolded state and according to the preset adaptation rule, to obtain a second layout file, and display, through rendering, the to-be-displayed page on the display in the unfolded state based on the second layout file. Alternatively, the foldable device may display, through rendering, the to-be-displayed page based on the first layout file, and may adjust the to-be-displayed page based on the display in the unfolded state and according to the preset adaptation rule during display through rendering. In this case, the foldable device may further store, as a second layout file, a layout file corresponding to a case in which the to-be-displayed page is displayed on the display in the unfolded state. Subsequently, when the foldable device needs to display the to-be-displayed page on the display in the unfolded state again, the foldable device may display, through rendering, the to-be-displayed page on the display of the foldable device in the unfolded state directly based on the second layout file.

In this embodiment of this application, for the foldable device, the developer may develop an application for the display in the folded state. When the application is applied to the display in the unfolded state, the foldable device may display, through rendering, the second layout file on the display in the unfolded state according to the preset adaptation rule and based on the display in the unfolded state and the first layout file. The preset adaptation rule is a rule for adjusting a font, an icon, and/or the like in the first layout file. In this way, a font size, an icon size, and/or the like on the to-be-displayed page displayed on the display in the unfolded state are/is adapted to the display in the unfolded state, so that the font, the icon, and/or the like are/is not excessively large when the to-be-displayed page is displayed on the display in the unfolded state. This improves a page display effect and improves user experience.

Optionally, after obtaining the to-be-displayed page, the foldable device may first determine whether the to-be-displayed page is adapted to the display in the unfolded state. When determining that the to-be-displayed display is not adapted to the display in the unfolded state, the foldable device may obtain the second layout file according to the preset adaptation rule and based on the display in the unfolded state and the first layout file. When the to-be-displayed page is adapted to the display in the unfolded state, the foldable device may display the to-be-displayed page in the original display manner of the application. That is, the foldable device may process only the to-be-displayed page that is not adapted, and displaying of an adapted page on the display in the unfolded state is not affected. This improves display efficiency and improves user experience.

Herein, the foldable device may determine, in either of the foregoing " Manner 1: Determine based on a page label" and " Manner 2: Determine based on page content", whether the to-be-displayed page is adapted to the display in the unfolded state. For specific determining content, refer to the foregoing descriptions. Details are not described herein again.

Optionally, when determining that the to-be-displayed page is not adapted to the display in the unfolded state, the foldable device may determine a type of the to-be-displayed page, that is, determine whether the to-be-displayed page is a native page or an H5 page, to obtain the first layout file based on the type of the to-be-displayed page. Then, the second layout file may be obtained according to the preset adaptation rule and based on the first layout file and the display in the unfolded state.

As described above, when the to-be-displayed page is the H5 page, the foldable device may generate, by using a webview kernel, the first layout file corresponding to the to-be-displayed page, and may obtain, by using the webview kernel, the second layout file based on the first layout file. The webview kernel may include a document parser, a node tree builder, a style parser, a layout calculator, a secondary rearranger, a layer tree builder, a render tree builder, and a renderer. For example, the document parser may parse the to-be-displayed page, to obtain nodes on the to-be-displayed page. The node tree builder may build a DOM tree based on a parent-child relationship between the nodes. In addition, the style parser may determine a style of each node in the DOM tree based on a CSS corresponding to the to-be-displayed page. The layout calculator may generate, based on the DOM tree and the style of each node, the first layout file corresponding to the to-be-displayed page. The secondary rearranger may obtain the second layout file according to the preset adaptation rule and based on the display in the unfolded state and the first layout file. The layer tree builder may generate a layer tree based on the second layout file. The render tree builder may generate a drawing tree based on the layer tree. Finally, after the renderer performs rasterization and synthesis processing on the drawing tree, the to-be-displayed page is displayed on the display of the foldable device in the unfolded state through GPU rendering.

As described above, when the to-be-displayed page is the native page, the foldable device may parse the to-be-displayed page by using the native engine of the system, to obtain the first layout file corresponding to the to-be-displayed page, and may obtain the second layout file according to the preset adaptation rule and based on the display in the unfolded state and the first layout file. Then, the native engine may display, through rendering, the to-be-displayed page on the display in the unfolded state based on the second layout file.

Optionally, when detecting that the foldable device switches from the unfolded state to the folded state, the foldable device may display the to-be-displayed page based on the original layout file corresponding to the to-be-displayed page, that is, may restore the to-be-displayed page to be in a display status corresponding to a case in which the display is in the folded state.

It should be understood that sequence numbers of the steps do not mean execution sequences in the foregoing embodiments. The execution sequences of the processes should be determined based on functions and internal logic of the processes, and should not be construed as any limitation on the implementation processes in embodiments of this application.

Corresponding to the page display method in the foregoing embodiments, an embodiment of this application further provides a page display apparatus. Modules of the apparatus may correspondingly implement steps of the page display method.

An embodiment of this application further provides an electronic device. The electronic device includes at least one memory, at least one processor, and a computer program that is stored in the at least one memory and that can be run on the at least one processor. When the processor executes the computer program, the electronic device is enabled to implement the steps in any one of the foregoing method embodiments. For example, a structure of the electronic device may be shown in FIG. 1.

An embodiment of this application further provides a computer-readable storage medium. The computer-readable storage medium stores a computer program. When the computer program is executed by a computer, the computer is enabled to implement the steps in any one of the foregoing method embodiments.

An embodiment of this application provides a computer program product. When the computer program product runs on an electronic device, the electronic device is enabled to implement the steps in any one of the foregoing method embodiments.

When an integrated unit is implemented in a form of a software function unit and sold or used as an independent product, the integrated unit may be stored in a computer-readable storage medium. Based on such an understanding, all or some of the processes of the method in embodiments of this application may be implemented by a computer program instructing related hardware. The computer program may be stored in a computer-readable storage medium. When the computer program is executed by a processor, steps in the foregoing method embodiments may be implemented. The computer program includes computer program code. The computer program code may be in a source code form, an object code form, an executable file form, some intermediate forms, or the like. The computer-readable storage medium may include at least any entity or apparatus that can carry the computer program code to an apparatus/electronic device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disk. In some jurisdictions, the computer-readable storage medium cannot be the electrical carrier signal or the telecommunication signal according to legislation and patent practices.

In the foregoing embodiments, descriptions in embodiments have respective focuses. For a part that is not described in detail or recorded in an embodiment, refer to related descriptions in other embodiments.

Persons of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this application.

In embodiments provided in this application, it should be understood that the disclosed apparatus/electronic device and method may be implemented in other manners. For example, the described apparatus/electronic device embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on an actual requirement to achieve the objectives of the solutions in embodiments.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions in embodiments of this application, and these modifications and replacements shall fall within the protection scope of this application.

**Claims**

1. A page display method, applied to an electronic device, wherein the electronic device comprises a second display, and the method comprises:

obtaining a first layout file corresponding to a to-be-displayed page, wherein the to-be-displayed page is a page of an application corresponding to a first display, and a first resolution of the first display is different from a second resolution of the second display; and

displaying the to-be-displayed page on the second display according to a preset adaptation rule and based on the second display and the first layout file, wherein the preset adaptation rule is a rule for adjusting at least one of a font, an icon, and a picture that are in the first layout file.

2. The method according to claim 1, wherein the displaying the to-be-displayed page on the second display according to a preset adaptation rule and based on the second display and the first layout file comprises:

determining whether the first layout file is adapted to the second display; and

when the first layout file is not adapted to the second display, displaying the to-be-displayed page on the second display according to the preset adaptation rule and based on the second display and the first layout file.

3. The method according to claim 2, wherein the determining whether the first layout file is adapted to the second display comprises:

obtaining a page label corresponding to the to-be-displayed page, and determining, based on the page label, whether the first layout file is adapted to the second display.

4. The method according to claim 2, wherein the determining whether the first layout file is adapted to the second display comprises:

obtaining the first resolution of the first display and the second resolution of the second display, and obtaining a font size of a target text in the first layout file and/or an icon size of a target icon in the first layout file, wherein the target text is any text on the to-be-displayed page, and the target icon is any icon on the to-be-displayed page; and

when the first resolution is lower than the second resolution, if the font size of the target text in the first layout file is greater than a first preset threshold, and/or the icon size of the target icon in the first layout file is greater than a third preset threshold, determining that the first layout file is not adapted to the second display; or

when the first resolution is higher than the second resolution, if the font size of the target text in the first layout file is less than a second preset threshold, and/or the icon size of the target icon in the first layout file is less than a fourth preset threshold, determining that the first layout file is not adapted to the second display.

5. The method according to any one of claims 1 to 4, wherein the displaying the to-be-displayed page on the second display according to a preset adaptation rule and based on the second display and the first layout file comprises:

adjusting the first layout file according to the preset adaptation rule and based on the second display, to obtain a second layout file; and

displaying the to-be-displayed page on the second display based on the second layout file.

6. The method according to claim 5, wherein when the first layout file is an original layout file corresponding to a case in which the to-be-displayed page is displayed on the first display, the adjusting the first layout file according to the preset adaptation rule and based on the second display, to obtain a second layout file comprises:

adjusting icon arrangement in the first layout file according to the preset adaptation rule and based on the second display, and/or adjusting a picture size or picture arrangement in the first layout file according to the preset adaptation rule and based on the second display, to obtain the second layout file.

7. The method according to claim 6, wherein the adjusting a picture size or picture arrangement in the first layout file according to the preset adaptation rule and based on the second display comprises:

when a picture width in the first layout file is less than a first width threshold, adjusting the picture arrangement in the first layout file according to the preset adaptation rule and based on the second display; or

when a picture width in the first layout file is greater than or equal to a first width threshold, adjusting a picture size on the to-be-displayed page according to the preset adaptation rule and based on the second display.

8. The method according to claim 5, wherein when the first layout file is a layout file obtained by proportionally zooming in/out an original layout file based on the second display, the adjusting the first layout file according to the preset adaptation rule and based on the second display, to obtain a second layout file comprises:

adjusting the font size in the first layout file according to the preset adaptation rule and based on the second display, to obtain the second layout file; and/or

adjusting the icon size and icon arrangement in the first layout file according to the preset adaptation rule and based on the second display, to obtain the second layout file.

9. The method according to claim 8, wherein when the first resolution of the first display is lower than the second resolution of the second display, a second font size in the second layout file is $\alpha$ times a first font size in the first layout file, and $\alpha = h/(h + w)$; or

when the first resolution of the first display is higher than the second resolution of the second display, a second font size in the second layout file is $\beta$ times a first font size in the first layout file, and $\beta = (h + w)/h$, wherein h is a height of the second display, and w is a width of the second display.

10. The method according to any one of claim 5, 8, and 9, wherein when the first layout file is the layout file obtained by proportionally zooming in/out the original layout file based on the second display, the adjusting the first layout file according to the preset adaptation rule and based on the second display, to obtain a second layout file comprises: when a picture width in the first layout file is less than a second width threshold, adjusting a picture size and picture arrangement in the first layout file according to the preset adaptation rule and based on the second display, to obtain the second layout file.

11. The method according to any one of claims 1 to 10, wherein the electronic device is an electronic device having a foldable display, the first display is a display corresponding to a case in which the foldable display is in a folded state, and the second display is a display corresponding to a case in which the foldable display is in an unfolded state; or

the first display is a display corresponding to a case in which the foldable display is in an unfolded state, and the second display is a display corresponding to a case in which the foldable display is in a folded state.

12. An electronic device, comprising a memory, a processor, and a computer program that is stored in the memory and that can be run on the processor, wherein when the processor executes the computer program, the electronic device is enabled to implement the page display method according to any one of claims 1 to 11.

13. A computer-readable storage medium, wherein the computer-readable storage medium stores a computer program, and when the computer program is executed by a computer, the computer is enabled to implement the page display method according to any one of claims 1 to 11.

Electronic device 100

Antenna 1                           Antenna 2

| Mobile communication module 2G/3G/4G/5G [140] | Wireless communication module BT/WLAN/GNSS/NFC/IR/FM [150] |

Displays 1 to N [190]

Cameras 1 to N [180]

Button [170]

Processor [110]

Internal memory [121]

External memory interface [120]

USB interface [130]

Sensor module [160]

Pressure sensor [160A]

Gyroscope sensor [160B]

Magnetic sensor [160C]

Acceleration sensor [160D]

Fingerprint sensor [160E]

Touch sensor [160F]

FIG. 1

| Application layer | Camera | Calendar | Maps | WLAN | Music | Dianping |
| | Gallery | Phone | Navigation | Bluetooth | Videos | ... |

| Application framework layer | Window manager | Content provider | Phone manager | Resource manager |
| | Notification manager | View system | ... | |

| System library | Surface manager | Three-dimensional graphics processing library | Android runtime |
| | Two-dimensional graphics engine | Media library | ... | |

| Kernel layer | Display driver | Camera driver |
| | Audio driver | Sensor driver | ... |

FIG. 2

AA  BB  CC  DD  EE

FF  GG  HH  II  JJ

(a)

AA  BB  CC  DD  EE  FF  GG  HH  II  JJ

(b)

AA  BB  CC  DD  EE

FF  GG  HH  II  JJ

KK  LL  MM  NN  OO

(c)

AA  BB  CC  DD  EE  FF  GG  HH  II  JJ

KK  LL  MM  NN  OO

(d)

FIG. 3

(a)

(b)

FIG. 4

501

502

503

~
TO
FIG. 5(b)

Q

High-quality
tour
Unlimited fun
in a garden

499 yuan

Hotel   Airplane   Ticket   Car rental  Nearby

Food    Team       Cruise   Study      Discovery
        building    ship     tour

504

Recommendations

**Lakeside hotel**
Near the West Lake, beautiful scenery
Minimum spend of 520 yuan
Sold 1,314

**Cape inn**
Near a seaside, and you can enjoy a
sunrise
Minimum spend of 340 yuan
Sold 1,124

**City hotel**
Close to a subway station
Minimum spend of 260 yuan
Sold 1,302

FIG. 5(a)

501'

502'

503'

High-quality tour

Unlimited fun in a garden

499 yuan

CONT.
FROM
FIG. 5(a)
~

Hotel  Airplane  Ticket  Car rental  Nearby  Food  Team  Cruise  Study  Discovery
                                              building  ship  tour

Recommendations

**Lakeside hotel**
Near the West Lake, beautiful scenery
Minimum spend of 520 yuan
Sold 1,314

**Cape inn**
Near a seaside, and you can enjoy a sunrise
Minimum spend of 340 yuan
Sold 1,124

**City hotel**
Close to a subway station
Minimum spend of 260 yuan
Sold 1,302

**Express hotel**
Close to a business center
Minimum spend of 200 yuan
Sold 1,002

504'

FIG. 5(b)

601

602

Hotel  Airplane  Movie  Car rental  Nearby

Food  Team building  KTV  Shopping  Discovery

👍 Recommendations

**Lakeside restaurant**
Near the West Lake

Minimum spend of 320 yuan
Sold 1,314

**Cape restaurant**
Near a seaside

Minimum spend of 240 yuan
Sold 1,124

**Fast food restaurant**
Close to a subway station

Minimum spend of 60 yuan
Sold 1,302

**City restaurant**
Near the People's Square

Minimum spend of 160 yuan
Sold 1,302

603

⇨ ~ TO FIG. 6(b)

FIG. 6(a)

601'

602'

CONT.
FROM
FIG. 6(a)

Hotel   Hairdressing   Movie   Car rental   Nearby

Food   Team building   KTV   Shopping   Discovery

👍 Recommendations

603'

**Lakeside restaurant**
Near the West Lake

Minimum spend of 320 yuan          Sold 1,314

TO
FIG. 6(c)

FIG. 6(b)

CONT.
FROM
FIG. 6(b)

601"

602"

Q

Hotel    Airplane    Movie    Car rental    Nearby    Food    Team building    KTV    Shopping    Discovery

👍 Recommendations

**Lakeside restaurant**
Near the West Lake

Minimum spend of 320 yuan
Sold 1,314

**Fast food restaurant**
Close to a subway station

Minimum spend of 60 yuan
Sold 1,302

**Delicious Cantonese food**
Delicious roast pork

Minimum spend of 120 yuan
Sold 1,110

**Hunan restaurant**
Crawfish

Minimum spend of 150 yuan
Sold 2,510

**Cape restaurant**
Near a seaside

Minimum spend of 240 yuan
Sold 1,124

**City restaurant**
Near the People's Square

Minimum spend of 160 yuan
Sold 1,302

**Old hot pot**
Sichuan hot pot

Minimum spend of 108 yuan
Sold 2,302

603"

FIG. 6(c)

A foldable device detects that an application is started — S701

The foldable device determines that a current status of the foldable device is an unfolded state, and obtains a to-be-displayed page of the application — S702

The foldable device displays the to-be-displayed page on a display in the unfolded state according to a preset adaptation rule and based on the display in the unfolded state and a first layout file — S703

FIG. 7

## INTERNATIONAL SEARCH REPORT

International application No.

**PCT/CN2022/114538**

### A. CLASSIFICATION OF SUBJECT MATTER

G06F 3/14(2006.01)i; G06F 3/04817(2022.01)i; G06F 9/451(2018.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT: 布局, 页面, 分辨率, 适配, 调整, 缩放, layout, page, frame, resolution, adapt, adjust, reduce, zoom

### C. DOCUMENTS CONSIDERED TO BE RELEVANT

| Category* | Citation of document, with indication, where appropriate, of the relevant passages | Relevant to claim No. |
|---|---|---|
| X | CN 110147230 A (ZHEJIANG SHULIAN TECHNOLOGY CO., LTD.) 20 August 2019 (2019-08-20)<br>    description, paragraphs [0039]-[0106] | 1-13 |
| X | CN 108427546 A (SHENZHEN TCL NEW TECHNOLOGY CO., LTD.) 21 August 2018 (2018-08-21)<br>    description, paragraphs [0037]-[0097] | 1-13 |
| X | CN 110083415 A (XIAMEN WANGSU CO., LTD.) 02 August 2019 (2019-08-02)<br>    description, paragraphs [0053]-[0147] | 1-13 |
| X | CN 108733336 A (BEIJING BYTEDANCE NETWORK TECHNOLOGY CO., LTD.) 02 November 2018 (2018-11-02)<br>    description, paragraphs [0023]-[0118] | 1-13 |
| A | CN 102457528 A (BEIJING UNIVERSITY OF POSTS AND TELECOMMUNICATIONS) 16 May 2012 (2012-05-16)<br>    entire document | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 October 2022** | **26 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| | International application No. |
| --- | --- |
| | **PCT/CN2022/114538** |

| Patent document cited in search report | | | Publication date (day/month/year) | Patent family member(s) | | | Publication date (day/month/year) |
| --- | --- | --- | --- | --- | --- | --- | --- |
| CN | 110147230 | A | 20 August 2019 | None | | | |
| CN | 108427546 | A | 21 August 2018 | CN | 108427546 | B | 08 March 2022 |
| CN | 110083415 | A | 02 August 2019 | None | | | |
| CN | 108733336 | A | 02 November 2018 | CN | 108733336 | B | 01 October 2021 |
| CN | 102457528 | A | 16 May 2012 | None | | | |

Form PCT/ISA/210 (patent family annex) (January 2015)

**EP 4 379 532 A1**

REFERENCES CITED IN THE DESCRIPTION

**Patent documents cited in the description**

- CN 202111237545